# EUROPEAN PATENT APPLICATION

(11) **EP 4 611 471 A1**
(43) Date of publication of application: **03.09.2025**
(21) Application number: 23885064.8
(22) Date of filing: 02.11.2023
(51) Int. Cl.: H04W 74/08

(54) **COMMUNICATION METHOD AND APPARATUS**

(30) Priority: 04.11.2022 CN 202211380049
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LONG, Yi, Shenzhen, Guangdong 518129 (CN); XIE, Xinqian, Shenzhen, Guangdong 518129 (CN)
(74) Representative: Pfenning, Meinig & Partner mbB
(86) International application number: PCT/CN2023/129416
(87) International publication number: WO 2024/094139

(57) **Abstract**

A communication method and apparatus are provided. The method includes: A terminal receives a reference signal from an access network device. The terminal determines, based on a received power of the reference signal and a first set, a quantity of repetition times of sending a random access preamble by the terminal, where the first set is a set of quantities of times of repeatedly sending the random access preamble by the terminal, and the first set includes at least one or more of the following elements: an integer multiple of 3, an integer multiple of 5, or an integer multiple of 7. The terminal repeatedly sends the random access preamble to the access network device on a random access occasion RO based on the quantity of repetition times. In this application, an element in the set of quantities of times of repeatedly sending the random access preamble by the terminal includes an integer multiple of 3, an integer multiple of 5, an integer multiple of 7, or the like, so that the set of quantities of times of repeatedly sending the random access preamble by the terminal matches a TDD configuration.

## Description

### CROSS-REFERENCE TO RELATED APPLICATIONS

This application claims priority to Chinese Patent Application No. 202211380049.5, filed with the China National Intellectual Property Administration on November 4, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a wireless communication system, a terminal needs to obtain uplink synchronization through random access, and access a network for communication. In a random access process, the terminal needs to send a random access preamble to a base station. To increase a received power of an access network device, the terminal may repeatedly send the random access preamble to the base station for a plurality of times. How to determine a quantity of times of repeatedly sending the random access preamble is a research direction.

### SUMMARY

Embodiments of this application provide a communication method and apparatus, to determine a quantity of times of repeatedly sending a random access preamble by a terminal.

According to a first aspect, a communication method is provided. The method is performed by a terminal, or a chip, a circuit, or the like used in the terminal. For example, the method is performed by the terminal. The method includes: The terminal receives a reference signal from an access network device. The terminal determines, based on a received power of the reference signal and a first set, a quantity of repetition times of sending a random access preamble by the terminal, where the first set is a set of quantities of times of repeatedly sending the random access preamble by the terminal, and the first set includes at least one or more of the following elements: an integer multiple of 3, an integer multiple of 5, or an integer multiple of 7. The terminal repeatedly sends the random access preamble to the access network device on a random access occasion RO based on the quantity of repetition times.

According to the foregoing design, because a quantity of uplink slots configured in one radio frame is usually an integer multiple of 3, 5, or 7, and one or more ROs may be configured in one uplink slot, there may be ROs whose quantity is an integer multiple of 3, 5, or 7 in one radio frame based on the foregoing TDD configuration. To ensure that the TDD configuration matches the set of quantities of times of repeatedly transmitting the random access preamble by the terminal, elements such as an integer multiple of 3, an integer multiple of 5, or an integer multiple of 7 are newly added to the set of quantities of times of repeatedly sending the random access preamble by the terminal. In this way, it is ensured that the set of quantities of times of repeatedly sending the random access preamble matches the TDD configuration.

In a design, the first set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

In a design, the method further includes: The terminal receives first information from the access network device, where the first information indicates the first set.

In a design, the method further includes: The terminal receives second information from the access network device, where the second information indicates a first element. The terminal determines the first set from a second set based on a quantity of elements included in the first set and the first element, where the first set is a subset of the second set.

According to a second aspect, a communication method is provided. The method is performed by an access network device, or a chip, a circuit, or the like used in the access network device. For example, the method is performed by the access network device. The method includes: The access network device sends first information to a terminal, where the first information indicates a first set, the first set is a set of quantities of times of repeatedly sending a random access preamble by the terminal, and the first set includes at least one or more of the following elements: an integer multiple of 3, an integer multiple of 5, or an integer multiple of 7. The access network device receives, on a random access occasion RO, the random access preamble repeatedly sent by the terminal, where the quantity of times of repeatedly sending the random access preamble by the terminal belongs to the first set.

According to the foregoing design, the set of repeatedly sending the random access preamble that is configured by the access network device for the terminal includes an element such as an integer multiple of 3, an integer multiple of 5, or an integer multiple of 7, so that the TDD configuration matches the set of quantities of times of repeated sending.

In a design, the first set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

According to a third aspect, a communication method is provided. The method is performed by a terminal, or a chip, a circuit, or the like used in the terminal. For example, the method is performed by the terminal. The method includes: The terminal receives a reference signal from an access network device. The terminal determines, based on a received power of the reference signal, a target quantity of repetition times of sending a random access preamble by the terminal, where the target quantity of repetition times is an integer multiple of 3, an integer multiple of 5, or an integer multiple of 7. The terminal repeatedly sends the random access preamble to the access network device on a random access occasion RO based on the target quantity of repetition times.

According to the foregoing design, the terminal determines the target quantity of repetition times based on the received power of the reference signal, where the target quantity of repetition times is an integer multiple of 3, an integer multiple of 5, or an integer multiple of 7, and the target quantity of repetition times matches a TDD configuration, so that the terminal can send the random access preamble in one radio frame based on the target quantity of repetition times. In this way, excessively long duration of random access of the terminal caused by excessively long time for sending the random access preamble by the terminal is avoided.

In a design, the determining, based on a received power of the reference signal, a target quantity of repetition times of sending a random access preamble by the terminal includes: determining a first quantity of repetition times based on the received power of the reference signal and a first set, where the first set is a set of quantities of times of repeatedly sending the random access preamble by the terminal, and the first set includes a universal set or a subset of the following set: {1, 2, 4, 8, 16, 32, 64, 128}; and determining the target quantity of repetition times based on the first quantity of repetition times, where the target quantity of repetition times is less than the first quantity of repetition times.

According to the foregoing design, the first set may be a set of quantities of times of repeatedly sending the random access preamble specified in a protocol. The terminal determines the first quantity of repetition times based on the first set. The terminal rolls back to the target quantity of repetition times based on the first quantity of repetition times, where the target quantity of repetition times is less than the first quantity of repetition times, and the target quantity of repetition times matches an existing TDD configuration.

In a design, the determining, based on a received power of the reference signal, a target quantity of repetition times of sending a random access preamble by the terminal includes: determining, based on the received power of the reference signal and a second set, the target quantity of repetition times of sending the random access preamble by the terminal, where the second set is a set of quantities of times of repeatedly sending the random access preamble by the terminal, and the second set includes at least one or more of the following elements: an integer multiple of 3, an integer multiple of 5, or an integer multiple of 7.

According to the foregoing design, the first set may be a first set including elements such as an integer multiple of 3, an integer multiple of 5, or an integer multiple of 7. The terminal directly determines the target quantity of repetition times based on the first set, so that the determined target quantity of repetition times matches an existing TDD configuration.

In a design, the second set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

In a design, the method further includes: The terminal receives first information from the access network device, where the first information
indicates the second set.

In a design, the method further includes: The terminal receives second information from the access network device, where the second information indicates a first element. The terminal determines the second set from a third set based on a quantity of elements included in the second set and the first element, where the second set is a subset of the third set.

According to a fourth aspect, a communication method is provided. The method is performed by an access network device, or a chip, a circuit, or the like used in the access network device. For example, the method is performed by the access network device. The method includes: The access network device receives, on a random access occasion RO, a random access preamble repeatedly sent by a terminal, where a target quantity of repetition times of repeatedly sending the random access preamble by the terminal is an integer multiple of 3, an integer multiple of 5, or an integer multiple of 7.

According to the foregoing design, a target quantity of repetition times of receiving the random access preamble by the access network device on the RO includes an integer multiple of 3, an integer multiple of 5, an integer multiple of 7, or the like, and transmission of the random access preamble matches a TDD configuration, to avoid excessively long random access duration.

In a design, the method further includes: The access network device sends first information to the terminal, where the first information indicates a second set, the second set is a set of quantities of times of repeatedly sending the random access preamble by the terminal, the second set includes at least one or more of the following elements: an integer multiple of 3, an integer multiple of 5, or an integer multiple of 7, and the target quantity of repetition times of repeatedly sending the random access preamble by the terminal belongs to the second set.

In a design, the second set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

In a design, the method further includes: The access network device sends second information to the terminal, where the second information indicates a first element, the first element is used to determine the second set in a third set, the second set includes at least one or more of the following elements: an integer multiple of 3, an integer multiple of 5, or an integer multiple of 7, and the target quantity of times of repeatedly sending the random access preamble by the terminal belongs to the second set.

According to a fifth aspect, a communication method is provided. The method is performed by a terminal, or a chip, a circuit, or the like used in the terminal. For example, the method is performed by the terminal. The method includes: The terminal determines a second frequency domain position of a first random access occasion RO based on a first frequency domain position of the first RO and a first offset value, where the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

According to the foregoing design, the first RO may be referred to as a new RO, and the second RO may be referred to as a legacy RO. When the new RO overlaps with the legacy RO, a frequency domain position of the new RO is offset to avoid overlapping between the legacy RO and the new RO.

In a design, the method further includes: The terminal receives first indication information from an access network device, where the first indication information indicates the first offset value.

In a design, the method further includes: The terminal determines a second frequency domain position of a third RO based on a first frequency domain position of the third RO and the first offset value, where the third RO belongs to the first physical random access resource, and does not overlap an RO in the second physical random access resource.

According to the foregoing design, in addition to the frequency domain position of the first RO, the frequency domain position of the third RO that does not overlap is further offset, to ensure that frequency domain positions of new ROs are consistent.

In a design, the method further includes: The terminal determines a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determines that the first RO is an invalid RO on the target SSB, where the invalid RO is not used to transmit the random access preamble on a beam corresponding to the target SSB; or if any SSB in the first SSB set does not belong to the second SSB set, determines that the first RO is an invalid RO on the SSB in the first SSB set, where the invalid RO is not used to transmit the random access preamble on a beam corresponding to any SSB in the first SSB set.

In a design, the method further includes: The terminal updates an association relationship between the first SSB and an RO.

In a design, the method further includes: The terminal determines a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determines an association relationship between the first RO and an SSB included in the second SSB set.

According to a sixth aspect, a communication method is provided. The method is performed by an access network device, or a chip, a circuit, or the like used in the access network device. For example, the method is performed by the access network device. The method includes: The access network device determines a second frequency domain position of a first random access occasion RO based on a first frequency domain position of the first RO and a first offset value, where the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

According to the foregoing design, the first RO may be referred to as a new RO, and the second RO may be referred to as a legacy RO. When the new RO overlaps with the legacy RO, a frequency domain position of the new RO is offset to avoid overlapping between the legacy RO and the new RO.

In a design, the method further includes: The access network device sends first indication information to a terminal, where the first indication information indicates the first offset value.

In a design, the method further includes: The access network device determines a second frequency domain position of a third RO based on a first frequency domain position of the third RO and the first offset value, where the third RO belongs to the first physical random access resource, and does not overlap an RO in the second physical random access resource.

In a design, the method further includes: The access network device determines a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determines that the first RO is an invalid RO on the target SSB, where the invalid RO is not used to transmit the random access preamble on a beam corresponding to the target SSB; or if any SSB in the first SSB set does not belong to the second SSB set, determines that the first RO is an invalid RO on the SSB in the first SSB set, where the invalid RO is not used to transmit the random access preamble on a beam corresponding to any SSB in the first SSB set.

In a design, the method further includes: The access network device updates an association relationship between the first SSB and an RO.

In a design, the method further includes: The access network device determines a first SSB set and a second SSB, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determines an association relationship between the first RO and an SSB included in the second SSB set.

According to a seventh aspect, an apparatus is provided. The apparatus includes a corresponding unit or module for performing the method described in any one of the first aspect to the sixth aspect. The unit or module may be implemented by a hardware circuit, may be implemented by software, or may be implemented by a combination of the hardware circuit and the software.

According to an eighth aspect, an apparatus is provided, including a processor and an interface circuit. The processor is configured to communicate with another apparatus by using the interface circuit, and perform the method described in any one of the first aspect to the sixth aspect. There are one or more processors.

According to a ninth aspect, an apparatus is provided, including a processor coupled to a memory. The processor is configured to invoke a program stored in the memory, to perform the method described in any one of the first aspect to the sixth aspect. The memory may be located inside or outside the apparatus. In addition, there may be one or more processors.

According to a tenth aspect, an apparatus is provided, including a processor and a memory. The memory is configured to store computer instructions. When the apparatus runs, the processor executes the computer instructions stored in the memory, to enable the apparatus to perform the method described in any one of the first aspect to the sixth aspect.

According to an eleventh aspect, a chip system is provided, and includes a processor, configured to perform the method according to any one of the first aspect to the sixth aspect.

According to a twelfth aspect, a computer-readable storage medium is provided. The computer-readable storage medium stores instructions, and when the instructions are run on a communication apparatus, the method according to any one of the first aspect to the sixth aspect is performed.

According to a thirteenth aspect, a computer program product is provided. The computer program product includes a computer program or instructions, and when the computer program or the instructions are run by an apparatus, the method described in any one of the first aspect to the sixth aspect is performed.

According to a fourteenth aspect, a system is provided, including the apparatus corresponding to the first aspect and the apparatus corresponding to the second aspect, or the apparatus corresponding to the third aspect and the apparatus corresponding to the fourth aspect, or the apparatus corresponding to the fifth aspect and the apparatus corresponding to the sixth aspect.

### BRIEF DESCRIPTION OF DRAWINGS

FIG. 1 is a diagram of a communication system according to an embodiment of this application;
FIG. 2 is a flowchart of random access according to an embodiment of this application;
FIG. 3 is a diagram of a radio frame according to an embodiment of this application;
FIG. 4 is a diagram of a single-period TDD configuration according to an embodiment of this application;
FIG. 5 is a diagram of a dual-period TDD configuration according to an embodiment of this application;
FIG. 6 is a flowchart of a communication method according to an embodiment of this application;
FIG. 7 is a diagram of a PRACH resource configuration according to an embodiment of this application;
FIG. 8 is a diagram of a time domain position of an RO according to an embodiment of this application;
FIG. 9 is a diagram of a frequency domain position of an RO according to an embodiment of this application;
FIG. 10 is a diagram of an association relationship between an SSB and an RO according to an embodiment of this application;
FIG. 11 is a diagram of a correspondence between an SSB and an RO according to an embodiment of this application;
FIG. 12 is another flowchart of a communication method according to an embodiment of this application;
FIG. 13 is still another flowchart of a communication method according to an embodiment of this application;
FIG. 14 is a diagram of RO overlapping according to an embodiment of this application;
FIG. 15 is a flowchart of a communication method according to an embodiment of this application;
FIG. 16 is another flowchart of a communication method according to an embodiment of this application;
FIG. 17 is still another flowchart of a communication method according to an embodiment of this application;
FIG. 18 is a diagram of a frequency domain offset of a new RO according to an embodiment of this application;
FIG. 19 is another diagram of a frequency domain offset of a new RO according to an embodiment of this application;
FIG. 20 to FIG. 24 are diagrams of invalid ROs according to embodiments of this application;
FIG. 25 is a diagram of an apparatus according to an embodiment of this application; and
FIG. 26 is another diagram of an apparatus according to an embodiment of this application.

### DESCRIPTION OF EMBODIMENTS

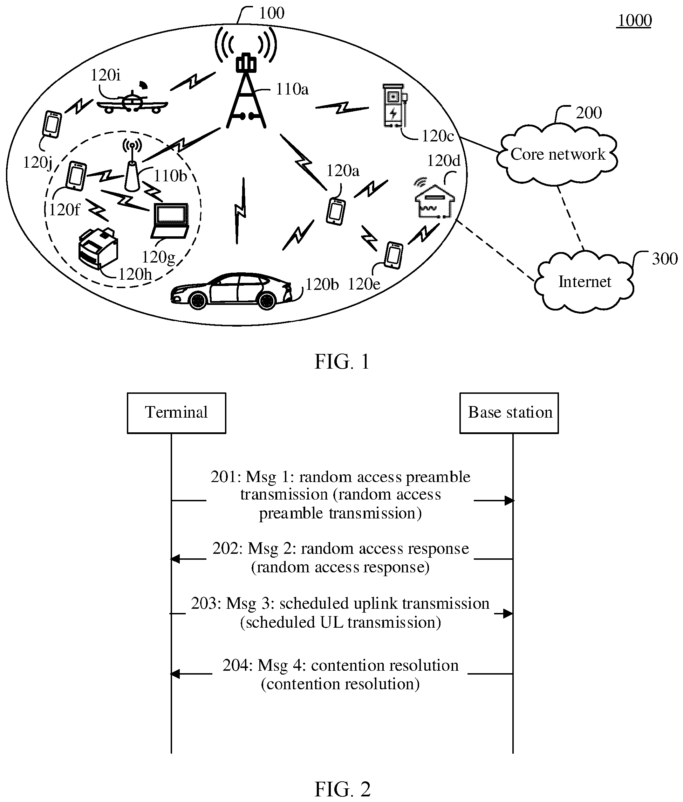

FIG. 1 is a diagram of an architecture of a communication system 1000 to which this application is applicable. As shown in FIG. 1, the communication system 1000 includes a radio access network 100 and a core network 200. Optionally, the communication system 1000 may further include an Internet 300.

The radio access network 100 may include at least one access network device (for example, 110a and 110b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or functions of the core network device and logical functions of the access network device may be integrated into a same physical device, or some functions of the core network device and some functions of the access network device may be integrated into one physical device. A wired or wireless manner may be used for connection between terminals and between access network devices. FIG. 1 is merely a diagram. The communication system 1000 may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or a unit, for example, may be a central unit (central unit, CU), a distributed unit (distributed unit, DU), a central unit control plane (CU control plane, CU-CP) module, or a central unit user plane (CU user plane, CU-UP) module, that completes some functions of a base station. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be the access network device, or may be an apparatus that can support the access network device in implementing the functions, for example, a chip system, a hardware circuit, a software module, or a combination of the hardware circuit and the software module. The apparatus may be installed in the access network device or may be matched with the access network device for use. In this application, the chip system may include a chip, or may include a chip and another discrete component. For ease of description, the following describes technical solutions provided in this application by using an example in which the apparatus configured to implement the functions of the access network device is the access network device and the access network device is a base station.

### (1) Protocol layer structure

Communication between an access network device and a terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

### (2) Central unit (central unit, CU) and distributed unit (distributed unit, DU)

An access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. A specific name of each interface is not limited in this application. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU. This is not limited.

The division into processing functions of the CU and the DU based on the protocol layer is merely an example, and the processing functions of the CU and the DU may alternatively be divided in another division manner. For example, the CU or the DU may have functions of more protocol layers through division. For another example, the CU or the DU may have some processing functions of the protocol layers through division. In a design, some functions of an RLC layer and functions of a protocol layer above the RLC layer are set on the CU, and remaining functions of the RLC layer and functions of a protocol layer below the RLC layer are set on the DU. In another design, division of functions of the CU or the DU may alternatively be performed based on a service type or another system requirement. For example, division may be performed based on a delay. Functions whose processing time needs to satisfy a delay requirement are set on the DU, and functions whose processing time does not need to satisfy the delay requirement are set on the CU. In another design, the CU may alternatively have one or more functions of a core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be divided at a physical layer (physical layer, PHY). For example, the DU may implement higher-layer functions of the PHY layer, and the RU may implement lower-layer functions of the PHY layer. When used for sending, a function of the PHY layer may include one or more of the following: cyclic redundancy check (cyclic redundancy check, CRC) code addition, channel encoding, rate matching, scrambling, modulation, layer mapping, precoding, resource mapping, physical antenna mapping, or a radio frequency sending function. When used for receiving, a function of the PHY layer may include one or more of the following: CRC check, channel decoding, rate de-matching, descrambling, demodulation, layer de-mapping, channel detection, resource de-mapping, physical antenna de-mapping, or a radio frequency receiving function. The higher-layer functions of the PHY layer may include some functions of the PHY layer. For example, the some functions are closer to the MAC layer. The lower-layer functions of the PHY layer may include some other functions of the PHY layer. For example, the some functions are closer to a radio frequency function. For example, the higher-layer functions of the PHY layer may include CRC code addition, channel encoding, rate matching, scrambling, modulation, and layer mapping, and the lower-layer functions of the PHY layer may include precoding, resource mapping, physical antenna mapping, and a radio frequency sending function. Alternatively, the higher-layer functions of the PHY layer may include CRC code addition, channel encoding, rate matching, scrambling, modulation, layer mapping, and precoding, and the lower-layer functions of the PHY layer may include resource mapping, physical antenna mapping, and a radio frequency sending function. For example, the higher-layer functions of the PHY layer may include CRC check, channel decoding, rate de-matching, decoding, demodulation, and layer de-mapping, and the lower-layer functions of the PHY layer may include channel detection, resource de-mapping, physical antenna de-mapping, and a radio frequency receiving function. Alternatively, the higher-layer functions of the PHY layer may include CRC check, channel decoding, rate de-matching, decoding, demodulation, layer de-mapping, and channel detection, and the lower-layer functions of the PHY layer may include resource de-mapping, physical antenna de-mapping, and a radio frequency receiving function.

For example, a function of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete functions of the access network device.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. The methods performed by the modules also fall within the protection scope of this application.

A terminal may also be referred to as a terminal device, user equipment (user equipment, UE), a mobile station, a mobile terminal, or the like. The terminal may be widely used in communication in various scenarios, for example, including but not limited to one or more of the following scenarios: device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, or a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

In this application, an apparatus configured to implement the functions of the terminal may be the terminal, or may be an apparatus that can support the terminal in implementing the functions, for example, a chip system, a hardware circuit, a software module, or a combination of the hardware circuit and the software module. The apparatus may be installed in the terminal or may be matched with the terminal for use. For ease of descriptions, the following describes technical solutions provided in this application by using an example in which the apparatus configured to implement the function of the terminal is the terminal.

A base station and the terminal may be fixed or movable. The base station and/or the terminal may be deployed on land, including an indoor or outdoor scenario, a handheld or vehicle-mounted scenario; or may be deployed on water; or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on land. Alternatively, the base station is deployed on land, and the terminal is deployed on water. Examples are not described one by one.

Roles of the base station and the terminal may be relative. For example, a helicopter or an uncrewed aerial vehicle 120i in FIG. 1 may be configured as a mobile base station. For a terminal 120j accessing the radio access network 100 by using 120i, the terminal 120i is the base station. However, for a base station 110a, 120i is the terminal. In other words, communication between 110a and 120i is performed via a radio air interface protocol. Alternatively, communication between 110a and 120i may be performed via an interface protocol between base stations. In this case, for 110a, 120i is also the base station. Therefore, both the base station and the terminal may be collectively referred to as communication apparatuses, 110a and 110b in FIG. 1 may be referred to as communication apparatuses with a base station function, and 120a to 120j in FIG. 1 may be referred to as communication apparatuses with a terminal function.

Communication between the base station and the terminal, base stations and terminals may be performed by using a licensed spectrum, or may be performed by using an unlicensed spectrum, or may be performed by using both the licensed spectrum and the unlicensed spectrum; and may be performed by using a spectrum below 6 gigahertz (gigahertz, GHz), or may be performed by using a spectrum above 6 GHz, or may be performed by using the spectrum below 6 GHz and the spectrum above 6 GHz. A spectrum resource for wireless communication is not limited in this application.

In this application, the base station sends a downlink signal or downlink information to the terminal, where the downlink signal or the downlink information is carried on a downlink channel; and the terminal sends an uplink signal or uplink information to the base station, where the uplink signal or the uplink information is carried on an uplink channel. To communicate with the base station, the terminal may establish a wireless connection to a cell controlled by the base station. The cell that establishes the wireless connection to the terminal is referred to as a serving cell of the terminal. When communicating with the serving cell, the terminal may be interfered by a signal from a neighboring cell.

In a wireless communication system, a terminal needs to obtain uplink synchronization through random access, and access a network device for communication. Random access includes contention-based random access and non-contention-based random access. The contention-based random access is used as an example. As shown in FIG. 2, a random access process includes the following steps.

Step 201: A terminal sends a message 1 (message 1, Msg 1) on a physical random access channel (physical random access channel, PRACH), where the message 1 carries a random access preamble preamble, and the message 1 may be referred to as random access preamble transmission.

For example, the terminal selects one preamble from 64 preset preambles, and determines a random access resource for sending the preamble. The terminal sends, to a base station on the determined random access resource, the Msg 1 including the preamble. The resource for sending the preamble may be referred to as a random access channel occasion (RACH occasion, RO).

Optionally, a process in which the terminal determines the RO includes: The base station separately sends a synchronization signal and physical broadcast channel block (synchronization signal and PBCH block, SSB, physical broadcast channel, PBCH) to the terminal by using a plurality of beams. The terminal selects one SSB whose received power is the largest from a plurality of SSBs. The terminal determines an RO corresponding to the SSB, where the RO is used as a random access resource used to send the preamble.

Optionally, the preamble is a sequence. The base station may determine, by processing the received preamble sequence, a start position for receiving the preamble, and further infer a transmission delay between the terminal and the base station. An advance (timing advance, TA) is inferred based on the transmission delay between the terminal and the base station. Optionally, the base station may notify the terminal of the TA by using a message 2 in Step 202, and the terminal may adjust uplink timing and the like based on the TA.

Optionally, the base station may determine a random access radio network temporary identifier (random access radio network temporary identifier, RA-RNTI) based on a detected preamble identity (identity, ID), a random access resource for transmitting the preamble, and the like. The base station allocates a temporary cell radio network temporary identifier (temporary cell radio network temporary identifier, TC-RNTI) to the terminal that performs random access, determines an uplink grant (uplink, UL Grant) for scheduling a message 3 (message 3, Msg 3), and the like.

Optionally, the base station may include the determined RA-RNTI, the TC-RNTI, the UL grant, and the like in the Msg 2. This is not limited.

Step 202: The base station sends the message 2 (message 2, Msg 2) on a physical downlink shared channel (physical downlink shared channel, PDSCH), where the message 2 may be referred to as a random access response (random access response, RAP).

Optionally, the message 2 may carry one or more of the following: the advance TA corresponding to the transmission delay, the RA-RNTI, the TC-RNTI, the UL grant for scheduling the message 3, or the like.

In a design, the base station broadcasts the message 2 in a downlink manner. All terminals in a service range of the base station may receive the message 2, and check the RA-RNTI included in the message 2. If the check succeeds, the terminal sends the message 3 to the base station based on the uplink grant used for scheduling carried in the message 2. Alternatively, if the check fails, the terminal does not perform any processing on the message 2. For example, any terminal may determine an RA-RNTI based on a preamble sent by the terminal in the message 1 and a random access resource corresponding to the preamble. The terminal compares the RA-RNTI determined by the terminal with the RA-RNTI included in the message 2. If the two RA-RNTIs are the same, the check succeeds. Otherwise, the check fails. The terminal may initiate random access again when the check fails.

Step 203: The terminal sends the message 3 to the base station, where the message 3 includes an identity of the terminal, and the message 3 may be referred to as scheduled uplink transmission.

Step 204: The base station sends a message 4 to the terminal, where the message 4 may be referred to as a contention resolution message. The message 4 may be used to resolve problems such as contention and conflict caused when a plurality of terminals attempt to use a same random access resource and a same preamble for access.

Optionally, the message 4 includes a contention resolution identity (contention resolution identity), and the contention resolution identity includes the identity of the terminal included in the message 3. The message 4 is a downlink broadcast message, and for any terminal that receives the message 4, an identity of the terminal may be obtained from the message 4. The terminal compares the identity of the terminal obtained from the message 4 with an identity of the terminal. If the two identities are the same, the terminal considers that the random access succeeds. Otherwise, the terminal considers that the random access fails. Optionally, the message 4 may carry scheduling information. After the random access succeeds, the terminal may perform uplink communication, downlink communication, or the like with the base station based on the scheduling information carried in the message 4. This is not limited. The terminal may initiate random access again when the random access fails.

In a random access process, the terminal uses one RO to send the preamble. Because radio transmission is greatly affected by an environment, when a distance between the terminal and the base station is long and/or a radio environment is poor, a power of a preamble received by the base station is likely to be less than an expected value, and the base station cannot accurately identify the preamble. Consequently, the random access of the terminal fails. To resolve this problem, the terminal may repeatedly send the preamble for a plurality of times on a plurality of ROs, and the base station combines preambles received for a plurality of times, to increase a power for the base station to receive the preambles and improve a coverage capability. In a current standard protocol, a configured set of quantities of times of repeatedly sending the preamble by the terminal includes {1, 2, 4, 8, 16, 32, 64, 128, 256}.

The terminal usually completes, in one radio frame, repeatedly sending the preamble for a plurality of times on a plurality of ROs, to avoid random access time to be excessively long. One radio frame may include one or more subframes, one subframe may include one or more slots, and one slot may include one or more symbols. There may be different slot lengths for different subcarrier spacings (subcarrier spacings, SCSs). For example, when the SCS is 15 kHz, a length of one slot is 1 millisecond (ms); or when the SCS is 30 kHz, a length of one slot is 0.5 ms. One slot may include one or more symbols. For example, one slot for a normal cyclic prefix (cyclic prefix, CP) may include 14 symbols, and one slot for an extended CP may include 12 symbols. The symbol may be an orthogonal frequency division multiplexing (orthogonal frequency division multiplexing, OFDM) symbol, or may be a discrete Fourier transform-spread-OFDM (discrete Fourier transform-spread-OFDM, DFT-s-OFDM) symbol, or the like. Unless otherwise specified, all symbols in embodiments of this application are time domain symbols.

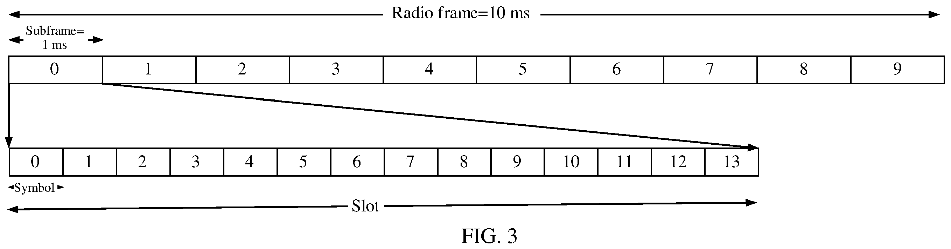

As shown in FIG. 3, an SCS of 13 kHz is used as an example. One radio frame may last for 10 ms, and each subframe may last for 1 ms. One radio frame includes 10 subframes, and the 10 subframes are numbered from 0 to 9. Each subframe may include one slot, and each slot lasts for 1 ms. Each slot may include 14 symbols, and the 14 symbols are numbered from 0 to 13.

The base station configures a transmission direction of each slot in the radio frame by using higher layer signaling. This process is referred to as a time division duplex (time division duplex, TDD) configuration. The higher layer signaling may be RRC signaling. A TDD configuration solution in a standard protocol includes a single-period TDD configuration and a dual-period TDD configuration.

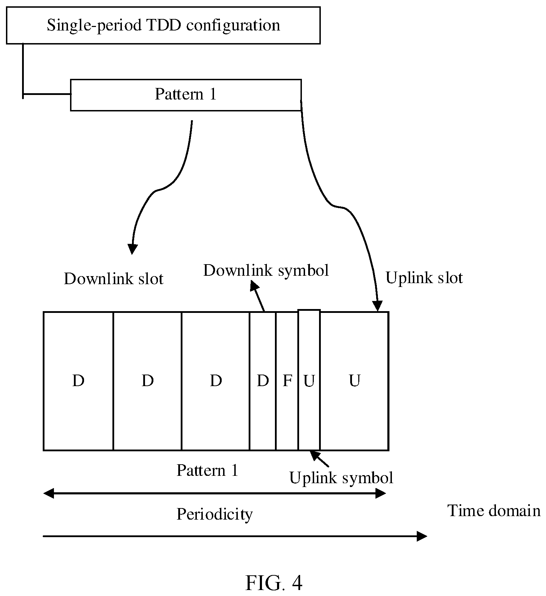

In a design, as shown in FIG. 4, the single-period TDD configuration includes one pattern pattern. If a periodicity of the pattern is 5 ms and a length of each slot is 1 ms, five slots are configured for each periodicity. In the five slots, three slots are downlink slots, one slot is a flexible slot, and one slot is an uplink slot. In the flexible slot, five symbols are downlink symbols, five symbols are uplink symbols, and the remaining four symbols are flexible symbols.

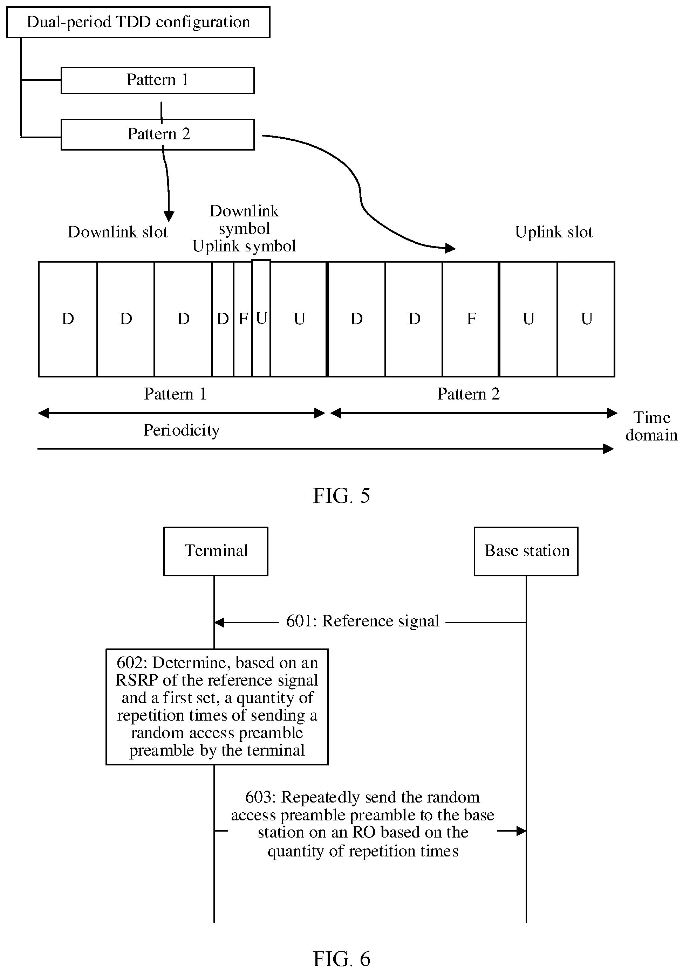

In a design, as shown in FIG. 5, the dual-period TDD configuration includes two patterns patterns. A periodicity of a pattern 1 is 5 ms. In the periodicity of 5 ms, three slots are downlink slots, one slot is a flexible slot, and one slot is an uplink slot. In the pattern 1, three slots are downlink, one slot is flexible, and one slot is uplink. A periodicity of a pattern 2 is 5 ms. In the periodicity of 5 ms, two slots are downlink slots, one slot is a flexible slot, and two slots are uplink slots. In the pattern 2, two slots are downlink, one slot is flexible, and two slots are uplink.

The terminal sends the message 1 in an uplink slot, and one or more ROs may be configured in each uplink slot. The dual-period TDD configuration is used as an example. If a radio frame of 10 ms has three uplink slots in total, a quantity of configured ROs in the radio frame of 10 ms is definitely an integer multiple of 3. However, a currently configured set of quantities of times of repeatedly sending the preamble by the terminal includes {1, 2, 4, 8, 16, 32, 64, 128, 256}. It is assumed that the quantity of times of repeatedly sending the preamble by the terminal is 2. In the foregoing dual-period TDD configuration, three uplink slots exist in one radio frame of 10 ms, and one RO is configured for each of the three uplink slots. In this case, three ROs are configured in the radio frame of 10 ms in total. However, the quantity of times of repeatedly sending the preamble by the terminal is 2, and two ROs are occupied. As a result, a maximum quantity of repetition times configured in one radio frame is not implemented. Alternatively, if the quantity of times of repeatedly sending the preamble by the terminal is 4, and the terminal repeatedly sends the preamble for four times, because three ROs are configured in a radio frame of 10 ms in total, the terminal cannot complete repeated transmission of the preamble in one radio frame, and consequently, random access duration of the terminal is long.

A problem to be resolved in embodiments of this application is a problem that a set {1, 2, 4, 8, 16, 32, 64, 128} of the preamble repeatedly transmitted by the terminal in the standard protocol conflicts with the TDD configuration. In embodiments of this application, it is found through research that a quantity of uplink slots configured in one radio frame is usually an integer multiple of 3, 5, or 7, and one or more ROs may be configured in one uplink slot. Therefore, there may be ROs whose quantity is an integer multiple of 3, 5, or 7 in one radio frame based on the foregoing TDD configuration. To ensure that the TDD configuration matches the set of quantities of times of repeatedly transmitting the preamble by the terminal, elements such as an integer multiple of 3, an integer multiple of 5, or an integer multiple of 7 are newly added to the set of quantities of times of repeatedly transmitting the preamble by the terminal.

### Embodiment 1

The following describes embodiments of this application with reference to the accompanying drawings. As shown in FIG. 6, a procedure is provided, and includes at least the following steps.

Step 601: A terminal receives a reference signal from a base station.

Optionally, the reference signal may be a downlink reference signal, for example, an SSB. This is not limited. For example, the reference signal is the SSB. The base station may send the SSB to the terminal, and the terminal may measure the SSB, to determine a reference signal received power (reference signal received power, RSRP) of the SSB. In the following Step 602, a quantity of repetition times of repeatedly sending a preamble by the terminal is determined based on the RSRP of the SSB and a first set. Alternatively,
the base station may send a plurality of SSBs to the terminal, and the plurality of SSBs are sent by using different beams. The terminal separately measures an RSRP of each SSB on the different beams. An SSB whose RSRP satisfies a condition is determined from the plurality of SSBs. For example, in the plurality of SSBs, an SSB whose RSRP value is the largest is used as the SSB whose RSRP satisfies the condition. This is not limited. In the following Step 602, the quantity of repetition times of repeatedly sending the preamble by the terminal is determined based on the SSB whose RSRP satisfies the condition and the first set.

Step 602: The terminal determines, based on the RSRP of the reference signal and the first set, the quantity of repetition times of sending the preamble by the terminal, where the first set is a set of quantities of times of repeatedly sending the preamble by the terminal, and the first set includes at least one or more of the following elements: an integer multiple of 3, an integer multiple of 5, an integer multiple of 7, or the like.

For example, the first set includes M elements, and there are M-1 thresholds. M is an integer greater than or equal to 2. The M-1 thresholds may be specified in a protocol, preset, configured by the base station for the terminal, or the like. This is not limited.

For example, the M elements in the first set are sorted in ascending order of values, and are respectively a 1^{st} element, a 2^{nd} element, a 3^{rd} element, ..., and an M^{th} element. The M-1 thresholds are sorted in ascending order of values, and are respectively a 1^{st} threshold, a 2^{nd} threshold, ..., and an (M-1)^{th} threshold.

When the RSRP of the reference signal is greater than or equal to the (M-1)^{th} threshold, the quantity of repetition times of sending the preamble by the terminal is the 1^{st} element in the first set. Alternatively, when the RSPP of the reference signal is greater than or equal to an i^{th} threshold and is less than an (i+1)^{th} threshold, the quantity of repetition times of sending the preamble by the terminal is an i^{th} element in the first set, where i is an integer greater than 1 and less than M. Alternatively, when the RSRP of the reference signal is less than the 1^{st} threshold, the quantity of repetition times of sending the preamble by the terminal is the M^{th} element in the first set. It can be learned from the foregoing descriptions that a larger value of the RSRP of the reference signal indicates better radio channel quality and a smaller quantity of times of repeatedly sending the preamble by the terminal. On the contrary, a smaller value of the RSRP of the reference signal indicates poorer radio channel quality and a larger quantity of times of repeatedly sending the preamble by the terminal.

For example, a value of M is 3, the first set includes three elements, and the first set is specifically {1, 2, 3}. In this case, two thresholds may be set, and are respectively referred to as a 1^{st} threshold and a 2^{nd} threshold, and a value of the 2^{nd} threshold is greater than that of the 1^{st} threshold. The terminal may measure the RSRP of the reference signal. When the measured RSRP of the reference signal is greater than or equal to the 2^{nd} threshold, the terminal determines that the quantity of repetition times of sending the preamble is 1. Alternatively, when the RSRP of the reference signal is greater than or equal to the 1^{st} threshold and is less than the 2^{nd} threshold, the terminal determines that the quantity of repetition times of sending the preamble is 2. Alternatively, when the RSRP of the reference signal is less than the 1^{st} threshold, the terminal determines that the quantity of repetition times of sending the preamble is 1.

Optionally, the set of quantities of repetition times of repeatedly sending the preamble by the terminal, that is, the first set in the foregoing descriptions, may be specified in a protocol, preset, preconfigured for the terminal, or the like. This is not limited. For example, the base station configures the first set for the terminal. The terminal receives first information from the base station, where the first information indicates the first set. Optionally, the first information may be a system information block 1 (system information block, SIB 1), other information, or the like. This is not limited. For example, if the first set includes 16 elements, the first information may carry 4-bit data indicating the 16 elements. Alternatively, if the first set includes eight elements, the first information may carry 3-bit data indicating the eight elements. Alternatively,
the base station may indicate one element to the terminal, and the terminal determines the first set based on the element and a quantity of elements included in the first set. For example, the terminal may receive second information from the base station, where the second information indicates a first element. The terminal determines the first set from a second set based on the quantity of elements included in the first set and the first element, where the first set is a subset of the second set. Optionally, the second information may be a SIB 1, another message, or the like. This is not limited. For example, the second set includes {1, 2, 3, 4, 5, 6, 7, 8, 9}. The second set may be preset, specified in a protocol, preconfigured for the terminal, or the like. This is not limited. If the first element indicated by the second information is 7, the terminal may use the first element 7 as a reference, and perform offset based on element data included in the first set along an element increasing direction or an element decreasing direction, to obtain the first set. For example, if the first set includes seven elements, the terminal may use the first element 7 as a reference, and perform offset by six elements along the element decreasing direction, to determine that the first set is {1, 2, 3, 4, 5, 6, 7}. Alternatively, if the first set includes three elements, the terminal may use the first element 7 as a reference, and perform offset by two elements along the element increasing direction, to determine that the first set is {7, 8, 9}.

Optionally, the first set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

When the first set is the universal set of the foregoing set, the elements in the first set include an integer multiple of 3, an integer multiple of 5, and an integer multiple of 7. Alternatively, when the first set is the subset of the foregoing set, elements in a selected subset (namely, the first set) include one or more of the following: an integer multiple of 3, an integer multiple of 5, an integer multiple of 7, or the like.

Step 603: The terminal repeatedly sends the preamble to the base station on an RO based on the quantity of repetition times.

Optionally, the RO may be specified in a protocol, preset, configured by the base station for the terminal, or the like. This is not limited. In a design, the base station configures a quantity of ROs corresponding to each reference signal. For example, the reference signal is the SSB. The terminal maps an SSB to an RO based on the quantity of ROs corresponding to each SSB, to determine a correspondence between the SSB and the RO. The terminal determines, based on the correspondence between the SSB and the RO, an RO corresponding to a received SSB, and repeatedly sends the preamble to the base station on the determined RO. For example, the base station sends a plurality of SSBs to the terminal. The terminal may measure an RPSP of each SSB. An SSB whose RSRP satisfies a condition is determined from the plurality of SSBs. For example, the SSB that satisfies the condition is an SSB whose PRSP value is the largest in the plurality of SSBs. The terminal determines, based on the correspondence between the SSB and the RO, an RO resource corresponding to the SSB that satisfies the condition, and repeatedly sends the preamble to the base station on the corresponding RO based on the determined quantity of repetition times. For example, if the SSB that satisfies the condition corresponds to four ROs, and the quantity of repetition times determined by the terminal is 3, the terminal selects three ROs from the four ROs to repeatedly send the preamble to the base station for three times.

The following describes an example of a process in which the base station configures a time domain position and a frequency domain position of the RO for the terminal.

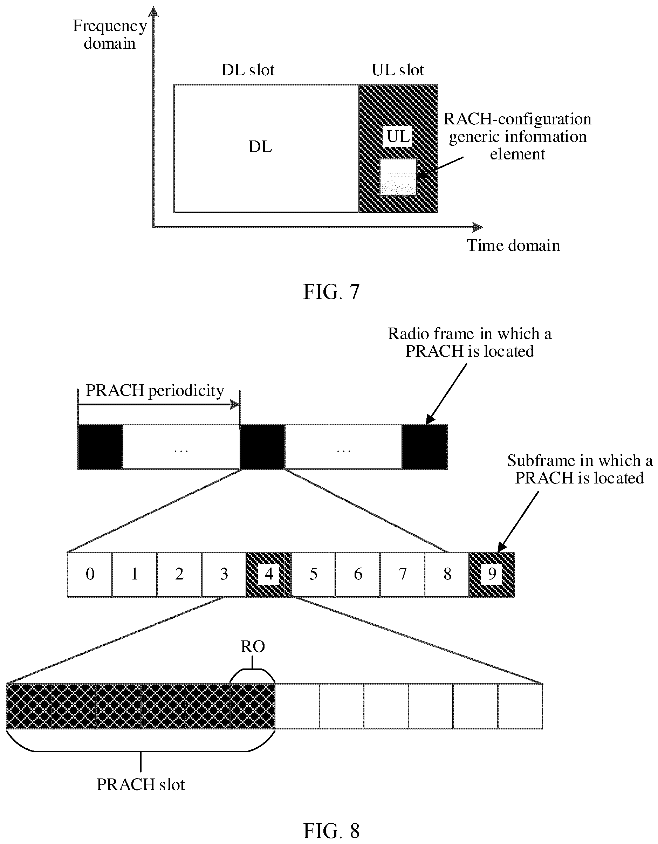

The base station configures a PRACH resource in a UL slot by using an RACH configuration generic (RACH-config generic) information element. It may be understood that the PRACH resource is a resource of a preamble in a message 1 sent by the terminal. For example, refer to FIG. 7. A horizontal direction represents a time domain, and a vertical direction represents a frequency domain. In FIG. 7, a white rectangle on the left represents a downlink (downlink, DL) slot, and a shadow rectangle on the right represents an (uplink, UL) slot. The base station may configure the PRACH resource in the UL slot. For example, the base station sends higher layer signaling to the terminal, where the higher layer signaling carries the RACH configuration generic information element, and the RACH configuration generic information element carries a random access channel-configuration index (prach-ConfigurationIndex) parameter. The terminal may obtain time domain position information such as a periodicity, a frame number, a subframe number, a slot number, and a quantity of ROs in a slot of PRACH distribution in time domain based on the parameter. In other words, the PRACH configuration generic information element may indicate one or more of the following: the time domain position information such as the periodicity, the frame number, the subframe number, the slot number, and the quantity of RO in the slot of the PRACH distribution in time domain.

For example, as shown in FIG. 8, the terminal obtains, by using the RACH configuration generic information element, a radio frame configured with the PRACH resource, where the radio frame may be referred to as a radio frame in which the PRACH is located. The base station may periodically configure the PRACH resource. Two adjacent radio frames configured with PRACH resources may be referred to as a PRACH periodicity. In the radio frame configured with the PRACH resource, the terminal may further obtain, by using the RACH configuration generic information element, a subframe configured with the PRACH, where the subframe may be referred to as a subframe in which the PRACH is located. In FIG. 8, one radio frame includes 10 subframes, the 10 subframes are numbered from 0 to 9, and the subframe 4 and the subframe 9 are subframes configured with PRACH resources. The terminal may further obtain a PRACH slot by using the RACH configuration generic information element. A concept of the PRACH slot is different from that of the slot, and the PRACH slot may be a slot including symbols configured with PRACH resources. For example, one subframe includes one slot, and one slot includes 12 symbols. Refer to FIG. 8. The subframe 4 includes one slot, and the slot includes 12 symbols. The first six symbols of the 12 symbols are configured as PRACH resources, and are used to transmit the preamble. Each symbol configured as the PRACH resource may be referred to as an RO. The six symbols that are configured as PRACH resources may be referred to as a PRACH slot.

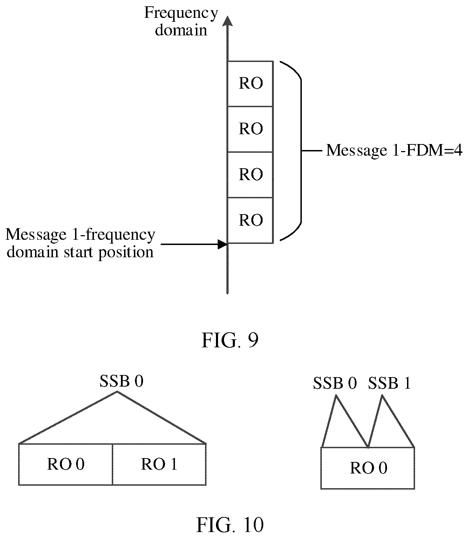

As described above, the terminal may determine a time domain position of the RO based on the RACH configuration generic information element. The terminal may further determine a frequency domain position of the RO based on the RACH configuration generic information element. For example, the RACH configuration generic information element may further indicate a message 1-frequency domain start position (msg1-FrequencyStart) parameter, a message 1-frequency division multiplexing (message 1-frequency division multiplexing, msg1-FDM) parameter, and the like. The terminal may determine the frequency domain position of the RO based on parameters such as the message 1-frequency domain start position parameter and message FDM. For example, the RACH configuration generic information element indicates a message 1-frequency domain start position. Refer to FIG. 9, message 1-FDM indicated by the RACH configuration generic information element is 4. In this case, the terminal sequentially offsets the frequency domain start position shown in FIG. 9 by four ROs along a frequency domain increasing direction based on a preset size of an RO frequency domain resource, to determine a frequency domain position of each RO.

For example, the following describes how the base station configures, for the terminal, a quantity N of ROs associated with an SSB, a process of mapping between the SSB and the RO, and a process in which the terminal determines a correspondence between the SSB and the RO by using the mapping between the SSB and the RO.

For example, the base station may configure a mapping relationship between N SSBs and one RO by using a higher layer parameter (ssb-perRACH-OccasionAndCB-PreamblesPerSSB): a quantity of SSBs of each RO and a quantity of contention preambles of each SSB.

When N is less than 1, one SSB is associated with 1/N ROs. When N is greater than 1, the N SSBs are associated with one RO, in other words, one SSB is associated with 1/N ROs. As shown in FIG. 10, when N=1/2, one SSB is associated with two ROs; or when N=2, one RO is associated with two SSBs. In this application, when one SSB is associated with a plurality of ROs, the terminal selects, based on the determined quantity of repetition times, a corresponding quantity of ROs from the plurality of ROs associated with the SSB, and repeatedly sends the preamble on the selected ROs. In this application, after an association relationship between the RO and the SSB is determined, RO-SSB mapping may be started. A sequence of the RO-SSB mapping is first performed in frequency domain then in time domain, first performed in a same slot, then performed in a same frame, and finally performed in different frames.

For example, when a set of SSBs sent by the base station is {SSB i, SSB i+1, SSB i+2, SSB i+3}, msg1-FDM=4, and N=1/4, one SSB is associated with four ROs, an RO set is denoted as {RO 1, RO 2, RO 3, RO 4}, and 16 ROs form a complete RO-SSB mapping periodicity.

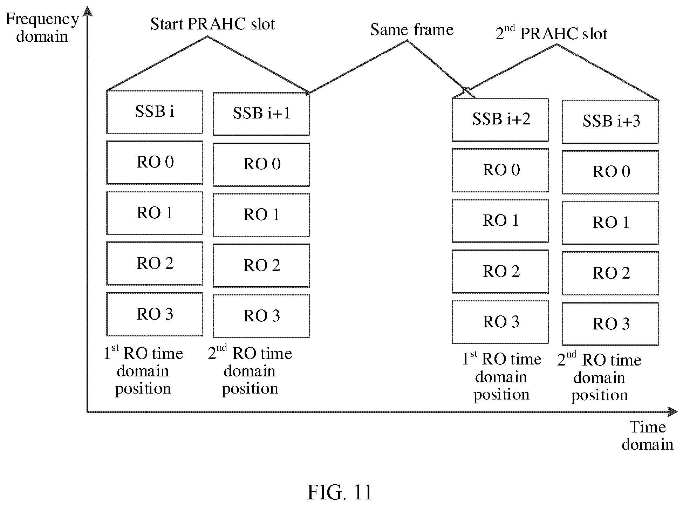

As shown in FIG. 11, two RO time domain positions are configured in one slot, and a quantity of times of frequency division multiplexing is 4. The sequence of the RO-SSB mapping may start from a frequency domain corresponding to a time-frequency position of an RO in a start PRACH slot. The start PRACH slot is a 1^{st} slot used by the terminal to perform random access, and may also be referred to as a 1^{st} PRACH slot. For example, an RO 1 to an RO 4 that correspond to the SSB i occupy four RO positions of a frequency domain corresponding to a 1^{st} RO time domain position of the start PRACH slot in a PRACH radio frame. An RO 1 to an RO 4 that correspond to the SSB i+1 occupy four RO positions of a frequency domain corresponding to a 2^{nd} RO time domain position of the start PRACH slot. An RO 1 to an RO 4 that correspond to the SSB i+2 occupy four RO positions of a frequency domain corresponding to a 1^{st} RO time domain position of a 2^{nd} PRACH slot in the same PRACH radio frame. An RO 1 to an RO 4 that correspond to the SSB i+3 occupy four RO positions of a frequency domain corresponding to a 2^{nd} RO time domain position of the 2^{nd} PRACH slot in the same PRACH radio frame.

According to the foregoing design, a quantity of ROs that is configured in one radio frame and that varies in different TDD configurations is considered, and the first set of quantities of times of repeatedly sending the preamble is determined, so that a problem that the set of quantities of times of repeatedly sending the preamble conflicts with the TDD configuration can be resolved.

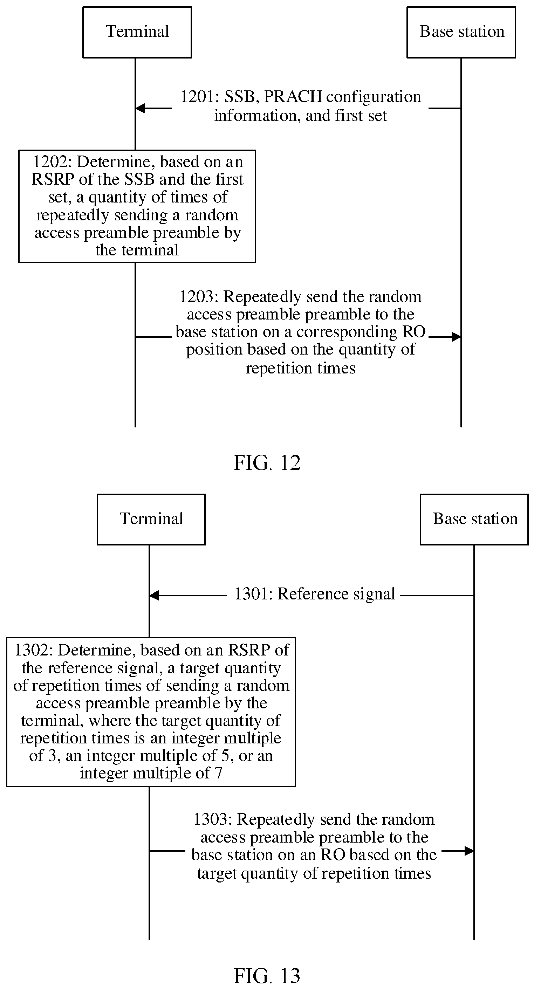

An example in which the reference signal is the SSB, and the base station configures the PRACH resource and the first set for the terminal is used. As shown in FIG. 12, a procedure is provided, and includes at least the following steps.

Step 1201: A base station sends an SSB, PRACH configuration information, and a first set to a terminal, where the first set may also be referred to as a set of quantities of repetition times of a preamble.

In a design, the base station may send the SSB to the terminal. The terminal measures the SSB, to determine an RSRP of the SSB. The quantity of times of repeatedly sending the preamble by the terminal is determined based on the RSRP of the SSB and the first set. For a specific process, refer to the descriptions in FIG. 6.

Optionally, the SSB may carry indication information of first information, and the first information may be a SIB 1. The terminal receives, at a corresponding position based on the indication information of the SIB 1, the SIB 1 from the base station, where the SIB 1 may carry indication information of the first set.

Optionally, the PRACH configuration information is used to configure a resource for sending the preamble by the terminal. The terminal may determine a time-frequency position of each RO based on the PRACH configuration information. The PRACH configuration information and the first set may be indicated in a same piece of information, or may be indicated in different information. This is not limited. That the PRACH configuration information and the first set are indicated in the same piece of information is used as an example. The SIB 1 may carry the PRACH configuration information. For example, the SIB 1 carries an RACH configuration generic information element, and the RACH configuration generic information element may indicate a time domain position, a frequency domain position, and the like of the RO. For details, refer to the foregoing descriptions in FIG. 7, FIG. 8, and FIG. 9. The terminal maps the SSB to the RO based on a mapping relationship that is between N SSBs and one RO and that is configured based on a higher layer parameter, to determine the RO corresponding to the SSB.

Step 1202: The terminal determines, based on the RSRP of the SSB and the first set, the quantity of times of repeatedly sending the preamble by the terminal.

Step 1203: The terminal repeatedly sends the preamble to the base station on a corresponding RO position based on the quantity of repetition times.

According to the foregoing design, the set (namely, the first set) that is of quantities of times of repeatedly sending the preamble and that is configured by the base station for the terminal includes one or more of the following elements: an integer multiple of 3, an integer multiple of 5, or an integer multiple of 7. The set of quantities of times of repeatedly sending the preamble by the terminal matches a TDD configuration. Therefore, a problem such as excessively long random access duration of the terminal or an RO waste caused by a conflict between the set of quantities of times of repeatedly sending the preamble by the terminal and the TDD configuration is resolved.

### Embodiment 2

Embodiments of this application further provide a solution. Different from the foregoing descriptions of introducing an element such as an integer multiple of 3, an integer multiple of 5, or an integer multiple of 7 into the set of quantities of times of repeatedly sending the preamble by the terminal, in this solution, it is emphasized that the quantity of repetition times of sending the preamble by the terminal may be an integer multiple of 3, an integer multiple of 5, an integer multiple of 7, or the like. The set of quantities of times of repeatedly sending the preamble by the terminal is not limited. For example, the set of quantities of times of repeatedly sending the preamble by the terminal may be a set specified in a protocol in a current standard, a set into which new elements are introduced, or the like. This is not limited. As shown in FIG. 13, an embodiment of this application provides a procedure, including at least the following steps.

Step 1301: A terminal receives a reference signal from a base station.

Step 1302: The terminal determines, based on an RSRP of the reference signal, a target quantity of repetition times of sending a preamble by the terminal, where the target quantity of repetition times is an integer multiple of 3, an integer multiple of 5, or an integer multiple of 7.

In a design, the terminal determines a first quantity of repetition times based on the received power of the reference signal and a first set, where the first set is a set of quantities of times of repeatedly sending the preamble by the terminal, and the first set includes a universal set or a subset of the following set: {1, 2, 4, 8, 16, 32, 64, 128}. The terminal determines the target quantity of repetition times based on the first quantity of repetition times, where the target quantity of repetition times is less than the first quantity of repetition times.

In the foregoing design, the first set may be a universal set or a subset of the set that is of quantities of times of repeatedly sending the preamble by the terminal and that is specified in a current protocol. The terminal may determine the first quantity of repetition times based on the RSRP of the reference signal and the first set. For example, the terminal compares the RSRP of the reference signal with a threshold, to determine the first quantity of repetition times. For example, the first set includes {1, 2, 4}, and two thresholds are configured: a threshold 1 and a threshold 2, where the threshold 2 is greater than the threshold 1. The terminal compares the RSRP of the reference signal with the threshold 1 and the threshold 2. When the RSPR of the reference signal is greater than or equal to the threshold 2, the first quantity of repetition times determined by the terminal is 1. Alternatively, when the RSRP of the reference signal is greater than or equal to the threshold 1 and is less than the threshold 2, the first quantity of repetition times determined by the terminal is 2. Alternatively, when the RSRP of the reference signal is less than the threshold 1, the first quantity of repetition times determined by the terminal is 4. Further, the terminal determines the target quantity of repetition times based on the first quantity of repetition times, where a value of the target quantity of repetition times is usually less than the first quantity of repetition times. For example, if the first quantity of repetition times determined by the terminal is 4, but the terminal repeatedly sends the preamble for three times, it may be considered that the target quantity of repetition times determined by the terminal is 3. In this application, a process in which the terminal determines the target quantity of repetition times based on the first quantity of repetition times is not limited.

For example, if the first quantity of repetition times determined by the terminal is 4, in a normal case, the terminal should repeatedly send the preamble for four times on four ROs. However, one of the four ROs does not satisfy a condition, and the terminal may repeatedly send the preamble for three times on the remaining three ROs. The RO that does not satisfy the condition may be: an RO on which a fault occurs, or an overlapping RO. For example, in a design, the terminal sends the preamble once in one RO. Correspondingly, the base station receives the preamble on one RO, where the RO may be referred to as an RO on which repeated sending cannot be performed. Alternatively, the terminal repeatedly sends the preamble on a plurality of ROs. Correspondingly, the base station receives the preamble on the plurality of ROs, performs power combination on a plurality of received preambles, and processes a combined preamble. The ROs may be referred to as ROs on which repeated sending can be performed. If an RO is configured as both an RO on which repeated sending cannot be performed and an RO on which repeated sending can be performed, it may be considered that the RO overlaps. In a design, for the overlapping RO, the terminal sends the preamble once by using the overlapping RO, and does not use the overlapping RO to repeatedly send the preamble for a plurality of times. Alternatively,
the foregoing example is still used. The first quantity of repetition times determined by the terminal is 4, and four RO resources need to be occupied for sending the preamble for four times. However, if three RO resources are configured in one radio frame, the terminal can repeatedly send the preamble for only three times in the radio frame, and the terminal may repeatedly send the preamble for three times in this scenario. In other words, if the first quantity of repetition times determined by the terminal is set to X, but Y RO resources are configured in first duration, where both Y and X are integers, and a value of Y is less than that of X, the target quantity of repetition times determined by the terminal is Y, and the terminal repeatedly sends the preamble to the base station for Y times. Optionally, the first duration may be specified duration in which the terminal completes repeatedly transmitting the preamble for a plurality of times, and may be a radio frame, another time length, or the like. This is not limited.

In another design, the terminal may determine, based on the received power of the reference signal and a second set, the target quantity of repetition times of sending the preamble by the terminal, where the second set is a set of quantities of times of repeatedly sending the preamble by the terminal, and the second set includes at least one or more of the following elements: an integer multiple of 3, an integer multiple of 5, or an integer multiple of 7.

Optionally, the terminal may determine an element in the second set as the target quantity of repetition times based on a value relationship between the received power of the reference signal and a threshold. For example, the second set includes M elements, and there are M-1 thresholds. M is an integer greater than or equal to 2. The M-1 thresholds may be specified in a protocol, preset, configured by the base station for the terminal, or the like. This is not limited.

For example, the M elements in the second set are sorted in ascending order of values, and are respectively a 1^{st} element, a 2^{nd} element, a 3^{rd} element, ..., and an M^{th} element. The M-1 thresholds are sorted in ascending order of values, and are respectively a 1^{st} threshold, a 2^{nd} threshold, ..., and an (M-1)^{th} threshold. When the RSRP of the reference signal is greater than or equal to the (M-1)^{th} threshold, the quantity of repetition times of sending the preamble by the terminal is the 1^{st} element in the second set. Alternatively, when the RSPP of the reference signal is greater than or equal to an i^{th} threshold and is less than an (i+1)^{th} threshold, the quantity of repetition times of sending the preamble by the terminal is an i^{th} element in the second set, where i is an integer greater than 1 and less than M. Alternatively, when the RSRP of the reference signal is less than the 1^{st} threshold, the quantity of repetition times of sending the preamble by the terminal is the M^{th} element in the second set.

Optionally, the second set may be specified in a protocol, preset, configured for the terminal, or the like. This is not limited. For example, the base station configures the second set for the terminal. The terminal may receive first information from the base station, where the first information indicates the second set. For example, if the second set includes four elements, the first information may carry 2-bit data indicating the second set. In this design, the base station may directly indicate the second set to the terminal. Alternatively,
the base station may indicate one element to the terminal, and the terminal determines the second set and the like in a third set based on the indicated element and a quantity of elements in the second set. For example, the terminal receives second information from the base station, where the second information indicates a first element. The terminal determines the second set from the third set based on the quantity of elements included in the second set and the first element, where the second set is a subset of the third set. Optionally, the third set is specified in a protocol, preset, configured for the base station, or the like. This is not limited. For example, the terminal uses the first element as a reference, and in the third set, performs offset based on the quantity of elements included in the second set along an element increasing direction or an element decreasing direction, to determine the second set, where the second set is a subset of the third set. For example, the third set is {1, 2, 3, 4, 5, 6, 7, 8, 9, ..., 128}, the first element indicated by the second information received by the terminal is 7, and the second set includes seven elements. In this case, the terminal uses the element 7 as a reference in the third set and performs offset by six elements along the element decreasing direction, to obtain the second set {1, 2, 3, 4, 5, 6}.

Optionally, the foregoing first information or second information may be a SIB 1, other information, or the like. This is not limited.

Optionally, in this design, the second set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}. It may be understood that, when the second set includes the universal set of the foregoing set, the elements included in the second set include an integer multiple of 3, an integer multiple of 5, and an integer multiple of 7. Alternatively, when the second set includes the subset of the foregoing set, a selected subset (namely, the second set) includes one or more of the following elements: an integer multiple of 3, an integer multiple of 5, or an integer multiple of 7.

Step 1303: The terminal repeatedly sends the preamble to the base station on an RO based on the target quantity of repetition times.

According to the foregoing design, whether the set of quantities of repetition times of sending the preamble by the terminal includes an element such as an integer multiple of 3, an integer multiple of 5, or an integer multiple of 7 is not limited. In the foregoing design, the quantity of times of repeatedly sending the preamble to the base station by the terminal on the RO is limited to be an integer multiple of 3, an integer multiple of 5, or an integer multiple of 7. Especially, when an RO configured in one radio frame is insufficient to support a determined quantity of repetition times of sending the preamble by the terminal, the terminal may actively discard some opportunities of repeatedly sending the preamble, and complete all repeated sending of the preamble in one radio frame, to reduce random access duration of the terminal.

It should be noted that, in this embodiment of this application, differences between procedures in different embodiments are mainly described, and procedures in different embodiments may be mutually referenced. In this embodiment of this application, contention-based random access is used as an example to describe the solutions of this application. This is not limited. For example, the solutions of this application may be further applied to a non-contention-based random access scenario. In non-contention-based random access, a terminal sends a message 1 in a random access process to a base station, where the message 1 carries a preamble. The base station sends a message 2 in the random access process to the terminal, where the message 2 may carry uplink or downlink scheduling data for scheduling the terminal. According to the solutions in this application, the terminal may determine a quantity of repetition times of repeatedly sending the preamble in the message 1, and repeatedly send the preamble to the base station on an RO based on the determined quantity of repetition times.

### Embodiment 3

Because there are a small quantity of uplink resources, in NR, if a PRACH used for repeated sending is newly added to a beam in a current design manner, a long delay may be caused. If an allowed PRACH sending delay is reduced without changing a quantity of repetition times, the newly added PRACH may overlap a legacy (legacy) PRACH. To distinguish between new and legacy terminals, a code division method is generally used. However, if code division is used on all newly added PRACH resources having overlapping ROs, available preambles of the PRACHs are reduced, and a user capacity is reduced. In order not to reduce the user capacity, a method of offsetting a frequency domain position of the new PRACH can be used to avoid RO overlapping (overlapping). In this case, ROs of the new PRACH and the legacy PRACH overlap only in time domain, but frequency domain positions are different, and time-frequency resources do not overlap.

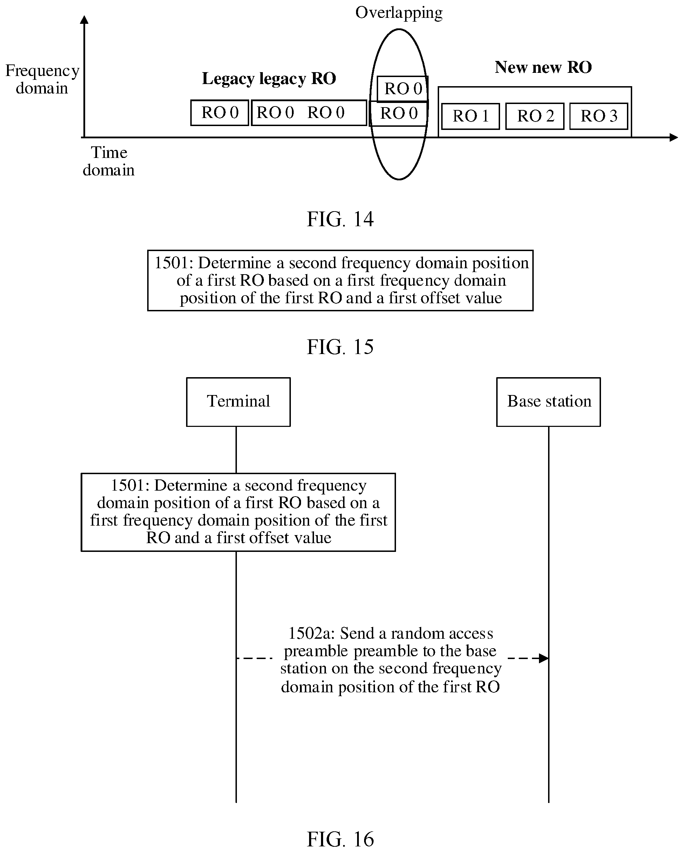

For example, as shown in FIG. 14, a legacy RO may overlap a new RO. The legacy RO is a configured RO not used for coverage enhancement, that is, an RO on which a preamble is not repeatedly sent. For the legacy RO, a terminal sends the preamble only once on the legacy RO, and on a base station side, the preamble is detected on one legacy RO. The new RO is a configured RO used for coverage enhancement. For the new RO, the terminal repeatedly sends the preamble on a plurality of new ROs. On the base station side, the preamble is detected on the plurality of new ROs, and power combination is performed on detected preambles, to increase a received power of the preamble. In this embodiment of this application, the legacy RO may overlap the new RO. RO overlapping means that both time domain resources and frequency domain resources of the two ROs overlap. In FIG. 14, for ease of viewing, an example in which two ROs overlap in time domain and do not overlap in frequency domain is used for illustration.

In this embodiment of this application, for a problem that the legacy RO overlaps the new RO, a frequency domain position of the new RO may be offset. Specifically, an original frequency domain position of the new RO may be used as a reference, and the original frequency domain position may be offset by one frequency offset along a frequency domain increasing direction or a frequency domain decreasing direction, to obtain a new frequency domain position of the new RO, and avoid overlapping between the legacy RO and the new RO.

The following describes the solutions in embodiments of this application with reference to the accompanying drawings. As shown in FIG. 15, an embodiment of this application provides a procedure, including at least the following steps.

Step 1501: Determine a second frequency domain position of a first RO based on a first frequency domain position of the first RO and a first offset value.

The first frequency domain position of the first RO overlaps a frequency domain position of a second RO, and a time domain position of the first RO overlaps a time domain position of the second RO. The first frequency domain position of the first RO may be referred to as an original frequency domain position of the first RO, and the second frequency domain position of the first RO is also referred to as a new frequency domain position of the first RO. In other words, when the original frequency domain position of the first RO overlaps the frequency domain position of the second RO, and the time domain position of the first RO overlaps the time domain position of the second RO, it may be considered that the first RO overlaps the second RO. The overlapping is that both the time domain positions and the frequency domain positions of the first RO and the second RO overlap. In this application, the new frequency domain position of the first RO is determined, and the new frequency domain position of the first RO may be referred to as the second frequency domain position of the first RO. For example, the first frequency domain position of the first RO is used as a reference, and the first frequency domain position is offset by the first offset value along a frequency domain increasing direction or a frequency domain decreasing direction, to obtain the second frequency domain position of the first RO. Optionally, the offset may be specifically performed by using a start frequency domain position in the first frequency domain position of the first RO as a reference, by using an end frequency domain position in the first frequency domain position of the first RO as a reference, or by using any frequency domain position in the first frequency domain position of the first RO as a reference. This is not limited.

In this application, the first RO belongs to a first physical random access resource, and the first physical random access resource is used to transmit a preamble for a plurality of times in one random access attempt. For example, in one random access process, a same preamble is repeatedly transmitted for a plurality of times. The first RO is also referred to as an RO used for coverage enhancement, a new RO, or the like. This is not limited. The second RO belongs to a second physical random access resource, and the second physical random access resource is used to transmit the preamble for a single time in one random access attempt. The second RO is also referred to as an RO used for non-coverage enhancement, a legacy RO, or the like. The second frequency domain position of the first RO is a frequency domain position for transmitting a random access preamble.

In this embodiment of this application, the foregoing step 1501 may be performed by a terminal, a chip or a component used in the terminal, or the like. Alternatively, step 1501 may be performed by a base station, a chip or a component used in the base station, or the like. This is not limited. Optionally, in this embodiment of this application, an example in which the step is performed by the terminal is used. As shown in FIG. 16, the method in FIG. 15 further includes the following step.

Step 1502a: The terminal sends the preamble to the base station on the second frequency domain position of the first RO.

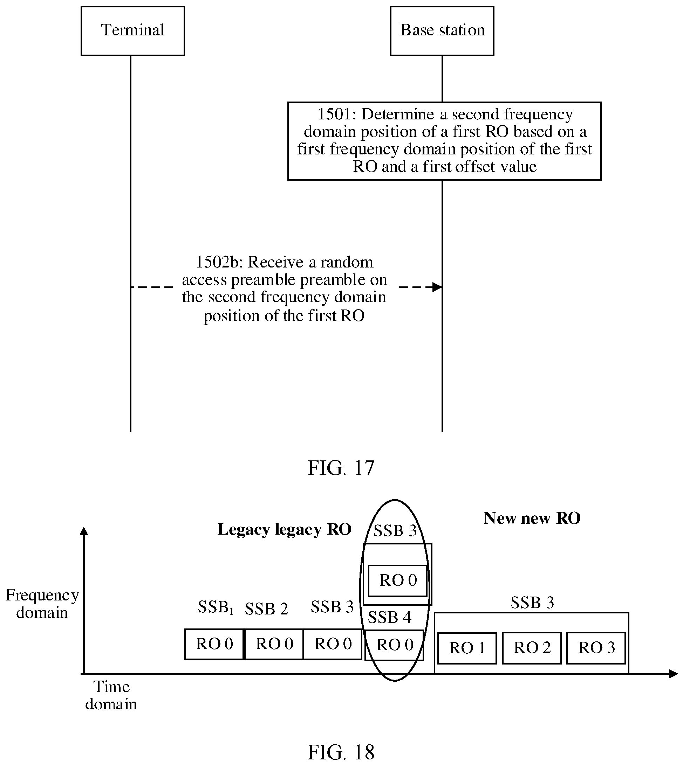

Optionally, in this embodiment of this application, an example in which the step is performed by the base station is used. As shown in FIG. 17, the method in FIG. 15 further includes the following step.

Step 1502b: The base station receives the preamble from the terminal on the second frequency domain position of the first RO.

According to the foregoing designs, the overlapping first RO is offset by one frequency domain position, so that overlapping between the first RO and the second RO can be avoided.

It should be noted that the foregoing solutions in FIG. 16 and FIG. 17 may be used separately, or may be used together. For example, the terminal may determine the second frequency domain position of the first RO based on the solution in step 1501, and send the preamble to the base station on the second frequency domain position of the first RO. The base station may determine the second frequency domain position of the first RO based on the solution in step 1501, and receive the preamble from the terminal on the second frequency domain position of the first RO.

Optionally, the first offset value may be specified in a protocol, preset, configured by the base station for the terminal, or the like. This is not limited. For example, the base station configures the first offset value for the terminal. The method in FIG. 16 or FIG. 17 further includes: The base station sends first indication information to the terminal. Correspondingly, the terminal receives the first indication information from the base station, where the first indication information indicates the first offset value and the like.

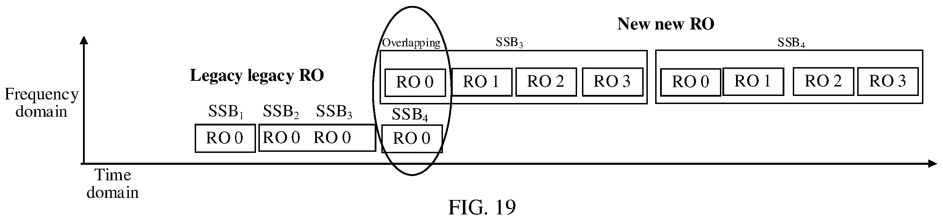

In a design, a frequency domain offset is performed for an RO that is in the first physical random access resource and that overlaps an RO in the second physical random access resource, to determine a new frequency domain position for the RO. The frequency domain offset is no longer performed for a non-overlapping RO in the first physical random access resource. For example, as shown in FIG. 18, the first physical random access resource includes four ROs, the four ROs may be referred to as new ROs, the four ROs are respectively referred to as an RO 0 to an RO 3, and the four ROs are associated with an SSB 3. The second physical random access resource includes four ROs, the four ROs are referred to as legacy ROs, and the four ROs are respectively associated with an SSB 1 to an SSB 4. If the RO 0 associated with the SSB 3 in the new ROs overlaps the RO 0 associated with the SSB 4 in the legacy ROs, the frequency domain offset is performed on a frequency domain position of the RO 0 associated with the SSB 3 in the new RO 0, to determine a new frequency domain position of the RO 0 associated with the SSB 3 in the new RO 0. The frequency domain offset is no longer performed for other ROs associated with the SSB in the new ROs. Alternatively,
in another design, a frequency domain offset is performed on the entire first physical access resource. To be specific, in addition to performing the frequency domain offset on the overlapping first RO in the first physical access resource, the frequency domain offset may further be performed on other non-overlapping ROs in the first physical random access resource. For example, as shown in FIG. 19, the first physical random access resource includes eight ROs, and the eight ROs are referred to as new ROs. Four of the eight ROs are associated with an SSB 3, and the remaining four ROs are associated with an SSB 4. The second physical random access resource includes four ROs, the four ROs are respectively associated with an SSB 1 to an SSB 4, and the four ROs may be referred to as legacy ROs. If a new RO 0 associated with the SSB 3 in the new ROs overlaps a legacy RO 0 associated with an SS 4 in the legacy ROs, the frequency domain offset is performed on frequency domain positions of all the new ROs included in the first physical random access resource. For example, in addition to the first RO, the first physical random access resource further includes a third RO, and the third RO does not overlap an RO in second physical random access. In this case, the frequency domain offset is further performed on the third RO. For example, a second frequency domain position of the third RO is determined based on a first frequency domain position of the third RO and the first offset value. For example, the first frequency domain position of the third RO is used as a reference, and the first frequency domain position is offset by the first offset value along the frequency domain increasing direction or the frequency domain decreasing direction, to obtain the second frequency domain position of the third RO. Further, specifically, a start frequency domain position of the third RO may be used as a reference, an end frequency domain position of the third RO may be used as a reference, or any frequency domain position of the third RO may be used as a reference. This is not limited.

It may be understood that, in the foregoing descriptions, an example in which the first RO in the first physical random access resource overlaps the second RO in the second physical random access resource is used for description. In this embodiment of this application, there may be one overlapping RO between the first physical random access resource and the second physical random access resource. In the first physical random access resource, the overlapping RO is referred to as the first RO, and in the second physical random access resource, the overlapping RO is referred to as the second RO. In this case, the first RO and the second RO each include one RO. Alternatively, there may be a plurality of overlapping ROs between the first physical random access resource and the second physical random access resource. For a new RO in the plurality of overlapping ROs, a frequency domain offset may be performed according to the foregoing methods. In this case, the first RO and the second RO may each include a plurality of ROs. For example, the first RO includes a new RO 0, a new RO 1, and a new RO 2, and the second RO includes a legacy RO 0, a legacy RO 1, and a legacy RO 2. If the new RO 0 overlaps the legacy RO 0, a frequency domain position of the new RO 0 may be re-determined according to the foregoing methods. If the new RO 1 overlaps the legacy RO 1, a frequency domain position of the new RO 1 may be re-determined according to the foregoing methods. If the new RO 2 overlaps the legacy RO 2, a frequency domain position of the new RO 2 may be re-determined according to the foregoing methods.

In this embodiment of this application, it can be learned that, a frequency domain position of an RO is offset, so that the new RO and the legacy RO occupy a same time domain resource, and different frequency domain resources. An SSB associated with the new RO may be the same as or different from an SSB associated with the legacy RO. This is not limited.

In a design, whether the SSB associated with the new RO is the same as the SSB associated with the legacy RO is not considered. A corresponding preamble used for coverage enhancement is transmitted in the new RO, and a corresponding preamble not used for coverage enhancement is transmitted in the legacy RO. Because different SSBs correspond to different beams, optionally, in this design, a requirement on the base station is high, and the base station needs to support receiving of the preamble by using a plurality of different beams in one time unit.

In another design, a capability of the base station to support a beam in one time unit is considered. To ensure normal use of a legacy terminal corresponding to the legacy RO, this application provides the following solutions.

A first SSB set and a second SSB set are determined, where the first SSB set is a set including an SSB associated with the first RO, and the second SSB set is a set including an SSB associated with an RO that is in the second physical random access resource and that has a same time domain position as the first RO. For a target SSB in the first SSB set, if the target SSB does not belong to the second SSB set, it is determined that the first RO is an invalid RO on the target SSB, where the invalid RO is not used to transmit the random access preamble on a beam corresponding to the target SSB.

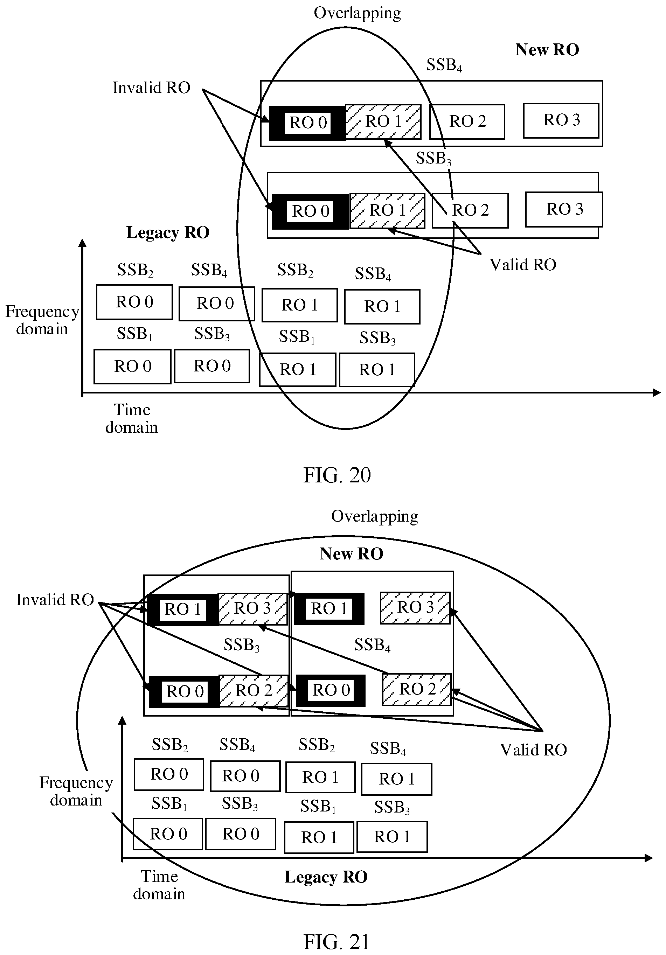

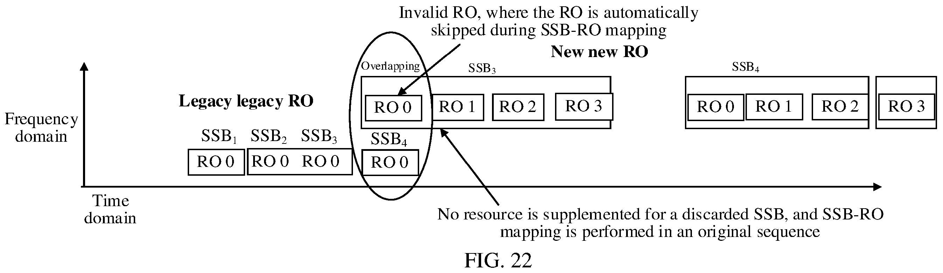

As shown in FIG. 21, for example, an RO 0 associated with an SSB 4 in new ROs is the first RO. Because the RO 0 is associated with the SSB 4, the first SSB set includes the SSB 4. If the second SSB set includes an SSB 2 and an SSB 1, the SSB 4 in the first SSB set does not belong to the second SSB set, and it may be determined that the RO 0 is an invalid RO on the SSB 4. An RO 0 associated with an SSB 3 is similar to that in the foregoing process, and details are not described again. Alternatively,
for example, an RO 1 associated with an SSB 4 in a new RO 0 is the first RO. Because the RO 1 is associated with the SSB 4, the first SSB set includes the SSB 4. If the second SSB set includes an SSB 3 and an SSB 4, the SSB 4 in the first SSB set belongs to the second SSB set, and it may be determined that the RO 1 is a valid RO on the SSB 4. An RO 1 associated with the SSB 3 is similar to that in the foregoing process, and details are not described again. Alternatively,
as shown in FIG. 21, ROs associated with an SSB 3 or an SSB 4 are an RO 0 to an RO 3, and time-frequency distribution of the four ROs is different from time-frequency distribution of ROs associated with the SSB 3 or the SSB 4 in FIG. 20. In FIG. 21, an example in which the RO 0 associated with the SSB 3 is the first RO is used. The first SSB set includes the SSB 3, and the second SSB set includes an SSB 1 and an SSB 3. The SSB 3 does not belong to the second SSB set. In this case, the RO 0 is an invalid RO on the SSB 3. Alternatively, an example in which the RO 3 associated with the SSB 3 is the first RO is used. The first SSB set includes the SSB 3, and the second SSB set includes the SSB 3 and the SSB 3. The SSB 3 belongs to the second SSB set. In this case, the RO 3 on the SSB 3 is a valid RO. Alternatively,
as shown in FIG. 22, an RO 0 in new ROs overlaps an RO 0 in legacy ROs, and a frequency domain position of the new RO 0 may be offset. After the offset, the new RO 0 and the legacy RO 0 have a same time domain position and different frequency domain positions. The new RO 0 is associated with an SSB 3, and the legacy RO 0 is associated with an SSB 4. Considering that in a same time unit, the base station may support receiving of the preamble on a beam corresponding to the SSB 4 configured in legacy UE, the new RO 0 may be set to an invalid RO 0.

In another design, considering a case in which one RO is associated with a plurality of SSBs, the first RO is associated with a plurality of SSBs, and the plurality of SSBs form the first SSB set, when any SSB in the first SSB set does not belong to the second SSB, it is determined that the first RO is an invalid RO in any SSB in the first SSB set. The invalid RO is not used to transmit the random access preamble on a beam corresponding to any SSB in the first SSB set. For example, the first RO is an RO 0 associated with an SSB 3 and an SSB 4, and the second SSB set includes an SSB 2 and an SSB 4. Although the SSB 4 associated with the RO 0 belongs to the second SSB set, the SSB 3 associated with the RO 0 does not belong to the second SSB set. In this case, it may be determined that the RO 0 is an invalid RO on any SSB in the first SSB set, in other words, the RO 0 is an invalid RO on both the SSB 3 and the SSB 4.

In a design, after the first RO is set to the invalid RO, no new resource is allocated to the first SSB, and the SSB and the RO are mapped in an original sequence. For example, in FIG. 22, after the new RO 0 is set to the invalid RO, no new RO resource is supplemented for the SSB 3, and a mapping relationship between the SSB and the RO is not changed.

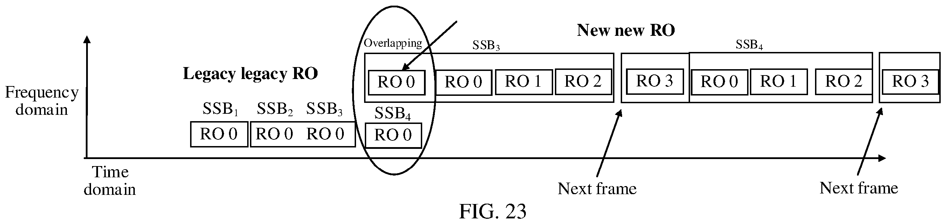

In another design, after the first RO is set to the invalid RO, an association relationship between the first SSB and the RO may be further updated. Updating the association relationship between the first SSB and the RO may also be described as: skipping the invalid RO when SSB-RO mapping is performed. For example, as shown in FIG. 23, after an RO 0 is set to an invalid RO, the invalid RO 0 may be skipped, and mapping between the SSB and the RO is performed.

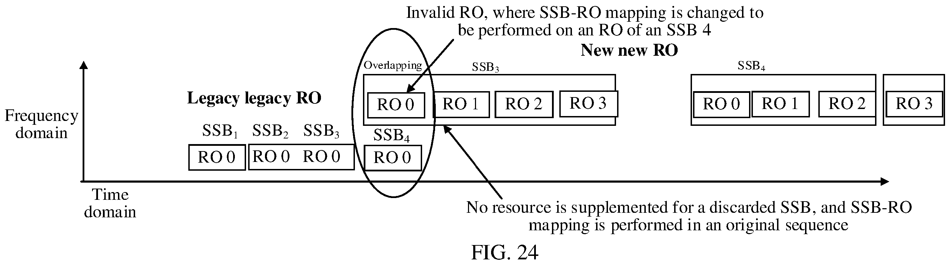

Alternatively, when the first SSB set does not belong to the second SSB set, an association relationship between the first RO and an SSB included in the second SSB set may be determined. For example, as shown in FIG. 24, for a new RO 0, an association relationship between the new RO 0 and an SSB 4 may be established. In this case, the base station may receive, in a same time unit on a beam corresponding to the SSB 4, a preamble transmitted on the new RO 0, a preamble transmitted on a legacy RO 0, and the like. Optionally, when the new RO 0 is set to an invalid RO, a new RO resource is no longer supplemented for an SSB 3, and the SSB and the RO may be mapped in an original sequence.

It may be understood that to implement functions in the foregoing embodiments, the base station and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

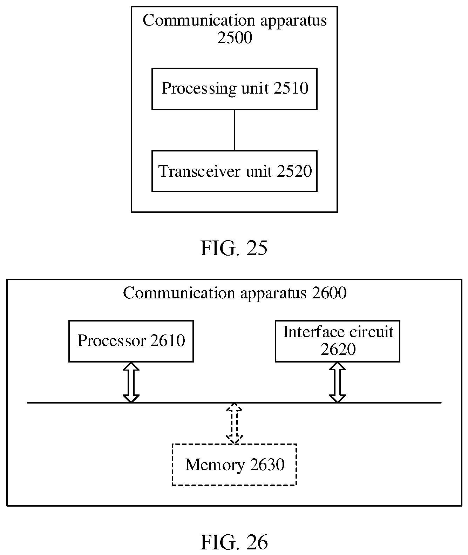

FIG. 25 and FIG. 26 are diagrams of structures of possible communication apparatuses according to embodiments of this application. These communication apparatuses may be configured to implement the function of the terminal or the base station in the foregoing method embodiments. Therefore, beneficial effects of the foregoing method embodiments can also be implemented. In this embodiment of this application, the communication apparatus may be one of the terminals 120a to 120j shown in FIG. 1, or may be the base station 110a or 110b shown in FIG. 1, or may be a module (like a chip) used in the terminal or the base station.

As shown in FIG. 25, the communication apparatus 2500 includes a processing unit 2510 and a transceiver unit 2520. The communication apparatus 2500 is configured to implement a function of the terminal or the base station in the method embodiment shown in FIG. 6, FIG. 13, FIG. 16, or FIG. 17.

When the communication apparatus 2500 is configured to implement the function of the terminal in the method embodiment shown in FIG. 6, the transceiver unit 2520 is configured to receive a reference signal from an access network device. The processing unit 2510 is configured to determine, based on a received power of the reference signal and a first set, a quantity of repetition times of sending a random access preamble by the terminal, where the first set is a set of quantities of times of repeatedly sending the random access preamble by the terminal, and the first set includes at least one or more of the following elements: an integer multiple of 3, an integer multiple of 5, or an integer multiple of 7. The processing unit 2510 is further configured to repeatedly send the random access preamble to the access network device on a random access occasion RO based on the quantity of repetition times.

In a design, the first set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

In a design, the transceiver unit 2520 is further configured to receive first information from the access network device, where the first information indicates the first set.

When the communication apparatus 2500 is configured to implement the function of the base station in the method embodiment shown in FIG. 6, the transceiver unit 2520 is configured to send first information to a terminal, where the first information indicates a first set, the first set is a set of quantities of times of repeatedly sending a random access preamble by the terminal, and the first set includes at least one or more of the following elements: an integer multiple of 3, an integer multiple of 5, or an integer multiple of 7. The transceiver unit 2520 is further configured to receive, on a random access occasion RO, the random access preamble repeatedly sent by the terminal, where the quantity of times of repeatedly sending the random access preamble by the terminal belongs to the first set.

In a design, the first set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

For more detailed descriptions of the processing unit 2510 and the transceiver unit 2520, directly refer to the related descriptions of the method embodiment shown in FIG. 6. Details are not described herein.

When the communication apparatus 2500 is configured to implement the function of the terminal in the method embodiment shown in FIG. 13, the transceiver unit 2520 is configured to receive a reference signal from an access network device. The processing unit 2510 is configured to determine, based on a received power of the reference signal, a target quantity of repetition times of sending a random access preamble by the terminal, where the target quantity of repetition times is an integer multiple of 3, an integer multiple of 5, or an integer multiple of 7. The processing unit 2510 is further configured to repeatedly send the random access preamble to the access network device on a random access occasion RO based on the target quantity of repetition times.

In a design, when determining, based on the received power of the reference signal, the target quantity of repetition times of sending the random access preamble by the terminal, the processing unit 2510 is specifically configured to: determine a first quantity of repetition times based on the received power of the reference signal and a first set, where the first set is a set of quantities of times of repeatedly sending the random access preamble by the terminal, and the first set includes a universal set or a subset of the following set: {1, 2, 4, 8, 16, 32, 64, 128}; and determine the target quantity of repetition times based on the first quantity of repetition times, where the target quantity of repetition times is less than the first quantity of repetition times.

In a design, when determining, based on the received power of the reference signal, the target quantity of repetition times of sending the random access preamble by the terminal, the processing unit 2510 is specifically configured to: determine, based on the received power of the reference signal and a second set, the target quantity of repetition times of sending the random access preamble by the terminal, where the second set is a set of quantities of times of repeatedly sending the random access preamble by the terminal, and the second set includes at least one or more of the following elements: an integer multiple of 3, an integer multiple of 5, or an integer multiple of 7.

In a design, the second set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

In a design, the transceiver unit 2520 is further configured to receive first information from the access network device, where the first information indicates the second set.

When the communication apparatus 2500 is configured to implement the function of the base station in the method embodiment shown in FIG. 13, the transceiver unit 2520 is configured to receive, on a random access occasion RO, a random access preamble repeatedly sent by a terminal, where a target quantity of repetition times of repeatedly sending the random access preamble by the terminal is an integer multiple of 3, an integer multiple of 5, or an integer multiple of 7.

In a design, the transceiver unit 2520 is further configured to send first information to the terminal, where the first information indicates a second set, the second set is a set of quantities of times of repeatedly sending the random access preamble by the terminal, the second set includes at least one or more of the following elements: an integer multiple of 3, an integer multiple of 5, or an integer multiple of 7, and the target quantity of repetition times of repeatedly sending the random access preamble by the terminal belongs to the second set.

In a design, the second set includes a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

For more detailed descriptions of the processing unit 2510 and the transceiver unit 2520, directly refer to the related descriptions of the method embodiment shown in FIG. 13. Details are not described herein.

When the communication apparatus 2500 is configured to implement the function of the terminal in the method embodiment shown in FIG. 16, the processing unit 2510 is configured to determine a second frequency domain position of a first random access occasion RO based on a first frequency domain position of the first RO and a first offset value, where the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

In a design, the apparatus further includes the transceiver unit 2520, configured to receive first indication information from an access network device, where the first indication information indicates the first offset value.

In a design, the processing unit 2510 is further configured to determine a second frequency domain position of a third RO based on a first frequency domain position of the third RO and the first offset value, where the third RO belongs to the first physical random access resource, and does not overlap an RO in the second physical random access resource.

In a design, the processing unit 2510 is further configured to: determine a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determine that the first RO is an invalid RO on the target SSB, where the invalid RO is not used to transmit the random access preamble on a beam corresponding to the target SSB; or if any SSB in the first SSB set does not belong to the second SSB set, determine that the first RO is an invalid RO on the SSB in the first SSB set, where the invalid RO is not used to transmit the random access preamble on a beam corresponding to any SSB in the first SSB set.

In a design, the processing unit 2510 is further configured to update an association relationship between the first SSB and an RO.

In a design, the processing unit 2510 is further configured to: determine a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determine an association relationship between the first RO and an SSB included in the second SSB set.

For more detailed descriptions of the processing unit 2510 and the transceiver unit 2520, directly refer to the related descriptions of the method embodiment shown in FIG. 16. Details are not described herein.

When the communication apparatus 2500 is configured to implement the function of the base station in the method embodiment shown in FIG. 17, the processing unit 2510 is configured to determine a second frequency domain position of a first random access occasion RO based on a first frequency domain position of the first RO and a first offset value, where the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

In a design, the apparatus further includes the transceiver unit 2520, configured to send first indication information to a terminal, where the first indication information indicates the first offset value.

In a design, the processing unit 2510 is further configured to determine a second frequency domain position of a third RO based on a first frequency domain position of the third RO and the first offset value, where the third RO belongs to the first physical random access resource, and does not overlap an RO in the second physical random access resource.

In a design, the processing unit 2510 is further configured to: determine a first SSB set and a second SSB set, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determine that the first RO is an invalid RO on the target SSB, where the invalid RO is not used to transmit the random access preamble on a beam corresponding to the target SSB; or if any SSB in the first SSB set does not belong to the second SSB set, determine that the first RO is an invalid RO on the SSB in the first SSB set, where the invalid RO is not used to transmit the random access preamble on a beam corresponding to any SSB in the first SSB set.

In a design, the processing unit 2510 is further configured to update an association relationship between the first SSB and an RO.

In a design, the processing unit 2510 is further configured to: determine a first SSB set and a second SSB, where the first SSB set is a set including an SSB associated with the first RO, and the second SSB set is a set including an SSB associated with an RO that is in the second physical random access resource and that has a same time domain position as the first RO; and for a target SSB in the first SSB set, if the target SSB does not belong to the second SSB set, determine an association relationship between the first RO and an SSB included in the second SSB set.

For more detailed descriptions of the processing unit 2510 and the transceiver unit 2520, directly refer to the related descriptions of the method embodiment shown in FIG. 17. Details are not described herein.

As shown in FIG. 26, the communication apparatus 2600 includes a processor 2610 and an interface circuit 2620. The processor 2610 and the interface circuit 2620 are coupled to each other. It may be understood that the interface circuit 2620 may be a transceiver or an input/output interface. Optionally, the communication apparatus 2600 may further include a memory 2630, configured to store instructions executed by the processor 2610, or store input data required by the processor 2610 to run instructions, or store data generated after the processor 2610 runs instructions.

When the communication apparatus 2600 is configured to implement the method shown in FIG. 6, FIG. 13, FIG. 16, or FIG. 17, the processor 2610 is configured to implement the function of the foregoing processing unit 2510, and the interface circuit 2620 is configured to implement the function of the foregoing transceiver unit 2520.

When the communication apparatus is a chip used in a terminal, the chip in the terminal implements functions of the terminal in the foregoing method embodiments. The chip in the terminal receives information from another module (for example, a radio frequency module or an antenna) in the terminal, and the information is sent by a base station to the terminal. Alternatively, the chip in the terminal sends information to another module (for example, a radio frequency module or an antenna) in the terminal, and the information is sent by the terminal to a base station.

When the communication apparatus is a module used in a base station, the module in the base station implements functions of the base station in the foregoing method embodiments. The module in the base station receives information from another module (for example, a radio frequency module or an antenna) in the base station, and the information is sent by a terminal to the base station. Alternatively, the module in the base station sends information to another module (for example, a radio frequency module or an antenna) in the base station, and the information is sent by the base station to a terminal. The module in the base station herein may be a baseband chip in the base station, or may be a DU or another module. The DU herein may be a DU in an open radio access network (open radio access network, O-RAN) architecture.

An embodiment of this application provides a communication system, including a first communication apparatus and a second communication apparatus. The first communication apparatus is configured to implement the function of the terminal in FIG. 6, and the second communication apparatus is configured to implement the function of the base station in FIG. 6. Alternatively, the first communication apparatus is configured to implement the function of the terminal in FIG. 13, and the second communication apparatus is configured to implement the function of the base station in FIG. 13. Alternatively, the first communication apparatus is configured to implement the function of the terminal in FIG. 16, and the second communication apparatus is configured to implement the function of the base station in FIG. 16. Alternatively, the first communication apparatus is configured to implement the function of the terminal in FIG. 17, and the second communication apparatus is configured to implement the function of the base station in FIG. 17.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write the information into the storage medium. Certainly, the storage medium may alternatively be a component of the processor. The processor and the storage medium may be located in the ASIC. In addition, the ASIC may be located in a base station or a terminal. Certainly, the processor and the storage medium may alternatively exist in a base station or terminal as discrete components.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. A communication method, comprising:
receiving a reference signal from an access network device;
determining, based on a received power of the reference signal and a first set, a quantity of repetition times of sending a random access preamble by a terminal, wherein the first set is a set of quantities of times of repeatedly sending the random access preamble by the terminal, and the first set comprises at least one or more of the following elements: an integer multiple of 3, an integer multiple of 5, or an integer multiple of 7; and
repeatedly sending the random access preamble to the access network device on a random access occasion RO based on the quantity of repetition times.

2. The method according to claim 1, wherein the first set comprises a subset or a universal set of the following set:
{1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

3. The method according to claim 1 or 2, further comprising:
receiving first information from the access network device, wherein the first information indicates the first set.

4. A communication method, comprising:
sending first information to a terminal, wherein the first information indicates a first set, the first set is a set of quantities of times of repeatedly sending a random access preamble by the terminal, and the first set comprises at least one or more of the following elements: an integer multiple of 3, an integer multiple of 5, or an integer multiple of 7; and
receiving, on a random access occasion RO, the random access preamble repeatedly sent by the terminal, wherein the quantity of times of repeatedly sending the random access preamble by the terminal belongs to the first set.

5. The method according to claim 4, wherein the first set comprises a subset or a universal set of the following set:
{1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

6. A communication method, comprising:
receiving a reference signal from an access network device;
determining, based on a received power of the reference signal, a target quantity of repetition times of sending a random access preamble by a terminal, wherein the target quantity of repetition times is an integer multiple of 3, an integer multiple of 5, or an integer multiple of 7; and
repeatedly sending the random access preamble to the access network device on a random access occasion RO based on the target quantity of repetition times.

7. The method according to claim 6, wherein the determining, based on a received power of the reference signal, a target quantity of repetition times of sending a random access preamble by a terminal comprises:
determining a first quantity of repetition times based on the received power of the reference signal and a first set, wherein the first set is a set of quantities of times of repeatedly sending the random access preamble by the terminal, and the first set comprises a universal set or a subset of the following set: {1, 2, 4, 8, 16, 32, 64, 128}; and
determining the target quantity of repetition times based on the first quantity of repetition times, wherein the target quantity of repetition times is less than the first quantity of repetition times.

8. The method according to claim 6, wherein the determining, based on a received power of the reference signal, a target quantity of repetition times of sending a random access preamble by a terminal comprises:
determining, based on the received power of the reference signal and a second set, the target quantity of repetition times of sending the random access preamble by the terminal, wherein the second set is a set of quantities of times of repeatedly sending the random access preamble by the terminal, and the second set comprises at least one or more of the following elements: an integer multiple of 3, an integer multiple of 5, or an integer multiple of 7.

9. The method according to claim 8, wherein the second set comprises a subset or a universal set of the following set: {1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

10. The method according to claim 8 or 9, further comprising:
receiving first information from the access network device, wherein the first information indicates the second set.

11. A communication method, comprising:
receiving, on a random access occasion RO, a random access preamble repeatedly sent by a terminal, wherein a target quantity of repetition times of repeatedly sending the random access preamble by the terminal is an integer multiple of 3, an integer multiple of 5, or an integer multiple of 7.

12. The method according to claim 11, further comprising:
sending first information to the terminal, wherein the first information indicates a second set, the second set is a set of quantities of times of repeatedly sending the random access preamble by the terminal, the second set comprises at least one or more of the following elements: an integer multiple of 3, an integer multiple of 5, or an integer multiple of 7, and the target quantity of repetition times of repeatedly sending the random access preamble by the terminal belongs to the second set.

13. The method according to claim 12, wherein the second set comprises a subset or a universal set of the following set:
{1, 2, 4, 8, 16, 32, 64, 128, 3, 6, 9, 12, 15, 18, 21, 24, 27, 30, 33, 36, 39, 42, 45, 48, 51, 54, 57, 60, 63, 66, 69, 72, 75, 78, 81, 84, 87, 90, 93, 96, 99, 102, 105, 108, 111, 114, 117, 120, 123, 126, 5, 10, 20, 25, 35, 40, 50, 55, 65, 70, 80, 85, 95, 100, 110, 115, 125, 7, 14, 28, 49, 56, 77, 91, 98, 112, 119}.

14. A communication method, comprising:
determining a second frequency domain position of a first random access occasion RO based on a first frequency domain position of the first RO and a first offset value, wherein
the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

15. The method according to claim 14, further comprising:
receiving first indication information from an access network device, wherein the first indication information indicates the first offset value.

16. The method according to claim 14 or 15, further comprising:
determining a second frequency domain position of a third RO based on a first frequency domain position of the third RO and the first offset value, wherein
the third RO belongs to the first physical random access resource, and does not overlap an RO in the second physical random access resource.

17. The method according to any one of claims 14 to 16, further comprising:
determining a first SSB set and a second SSB set, wherein the first SSB set is a set comprising an SSB associated with the first RO, and the second SSB set is a set comprising an SSB associated with an RO that is in the second physical random access resource and that has a same time domain position as the first RO; and
for a target SSB in the first SSB set, if the target SSB does not belong to the second SSB set, determining that the first RO is an invalid RO on the target SSB, wherein the invalid RO is not used to transmit the random access preamble on a beam corresponding to the target SSB; or
if any SSB in the first SSB set does not belong to the second SSB set, determining that the first RO is an invalid RO on the SSB in the first SSB set, wherein the invalid RO is not used to transmit the random access preamble on a beam corresponding to any SSB in the first SSB set.

18. The method according to claim 17, further comprising:
updating an association relationship between the first SSB and an RO.

19. The method according to any one of claims 14 to 16, further comprising:
determining a first SSB set and a second SSB set, wherein the first SSB set is a set comprising an SSB associated with the first RO, and the second SSB set is a set comprising an SSB associated with an RO that is in the second physical random access resource and that has a same time domain position as the first RO; and
for a target SSB in the first SSB set, if the target SSB does not belong to the second SSB set, determining an association relationship between the first RO and an SSB comprised in the second SSB set.

20. A communication method, comprising:
determining a second frequency domain position of a first random access occasion RO based on a first frequency domain position of the first RO and a first offset value, wherein
the first frequency domain position of the first RO overlaps a frequency domain position of a second RO, and a time domain position of the first RO overlaps a time domain position of the second RO; the first RO belongs to a first physical random access resource, and the first physical random access resource is used to transmit a random access preamble for a plurality of times in one random access attempt; the second RO belongs to a second physical random access resource, and the second physical random access resource is used to transmit the random access preamble for a single time in one random access attempt; and the second frequency domain position of the first RO is a frequency domain position for transmitting the random access preamble.

21. The method according to claim 20, further comprising:
sending first indication information to a terminal, wherein the first indication information indicates the first offset value.

22. The method according to claim 20 or 21, further comprising:
determining a second frequency domain position of a third RO based on a first frequency domain position of the third RO and the first offset value, wherein
the third RO belongs to the first physical random access resource, and does not overlap an RO in the second physical random access resource.

23. The method according to any one of claims 20 to 22, further comprising:
determining a first SSB set and a second SSB set, wherein the first SSB set is a set comprising an SSB associated with the first RO, and the second SSB set is a set comprising an SSB associated with an RO that is in the second physical random access resource and that has a same time domain position as the first RO; and
for a target SSB in the first SSB set, if the target SSB does not belong to the second SSB set, determining that the first RO is an invalid RO on the target SSB, wherein the invalid RO is not used to transmit the random access preamble on a beam corresponding to the target SSB; or
if any SSB in the first SSB set does not belong to the second SSB set, determining that the first RO is an invalid RO on the SSB in the first SSB set, wherein the invalid RO is not used to transmit the random access preamble on a beam corresponding to any SSB in the first SSB set.

24. The method according to claim 23, further comprising:
updating an association relationship between the first SSB and an RO.

25. The method according to any one of claims 20 to 22, further comprising:
determining a first SSB set and a second SSB, wherein the first SSB set is a set comprising an SSB associated with the first RO, and the second SSB set is a set comprising an SSB associated with an RO that is in the second physical random access resource and that has a same time domain position as the first RO; and
for a target SSB in the first SSB set, if the target SSB does not belong to the second SSB set, determining an association relationship between the first RO and an SSB comprised in the second SSB set.

26. A communication apparatus, comprising a unit configured to perform the method according to any one of claims 1 to 3, a unit configured to perform the method according to any one of claims 6 to 10, or a unit configured to perform the method according to any one of claims 14 to 19.

27. A communication apparatus, comprising a processor, wherein the processor is configured to execute instructions, to enable the communication apparatus to perform the method according to any one of claims 1 to 3, the method according to any one of claims 6 to 10, or the method according to any one of claims 14 to 19.

28. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 3, the method according to any one of claims 6 to 10, or the method according to any one of claims 14 to 19 by using a logic circuit or by executing code instructions.

29. A communication apparatus, comprising a unit configured to perform the method according to claim 4 or 5, a unit configured to perform the method according to any one of claims 11 to 13, or a unit configured to perform the method according to any one of claims 20 to 25.

30. A communication apparatus, comprising a processor, wherein the processor is configured to execute instructions, to enable the communication apparatus to perform the method according to claim 4 or 5, the method according to any one of claims 11 to 13, or the method according to any one of claims 20 to 25.

31. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to claim 4 or 5, the method according to any one of claims 11 to 13, or the method according to any one of claims 20 to 25 by using a logic circuit or by executing code instructions.

32. A computer-readable storage medium, wherein the storage medium stores a computer program or instructions, and when the computer program or the instructions are executed by a communication apparatus, the method according to any one of claims 1 to 3, the method according to claim 4 or 5, the method according to any one of claims 6 to 10, the method according to any one of claims 11 to 13, the method according to any one of claims 14 to 19, or the method according to any one of claims 20 to 25 is implemented.

33. A computer program product, comprising a computer program or instructions, wherein when the computer program or the instructions are run by an apparatus, the method according to any one of claims 1 to 3, the method according to claim 4 or 5, the method according to any one of claims 6 to 10, the method according to any one of claims 11 to 13, the method according to any one of claims 14 to 19, or the method according to any one of claims 20 to 25 is enabled to be performed.

34. A chip, comprising a processor, wherein the processor is coupled to a memory, and is configured to execute a computer program or instructions stored in the memory, and the chip is enabled to implement the method according to any one of claims 1 to 3, the method according to claim 4 or 5, the method according to any one of claims 6 to 10, the method according to any one of claims 11 to 13, the method according to any one of claims 14 to 19, or the method according to any one of claims 20 to 25.

35. A communication system, comprising a first communication apparatus and a second communication apparatus, wherein
the first communication apparatus is configured to implement the method according to any one of claims 1 to 3, and the second communication apparatus is configured to implement the method according to claim 4 or 5;
the first communication apparatus is configured to implement the method according to any one of claims 6 to 10, and the second communication apparatus is configured to implement the method according to any one of claims 11 to 13; or
the first communication apparatus is configured to implement the method according to any one of claims 14 to 19, and the second communication apparatus is configured to implement the method according to any one of claims 20 to 25.
